(19) Europäisches Patentamt
European Patent Office
Office européen des brevets

(11) EP 4 671 223 A1

(12) EUROPEAN PATENT APPLICATION

(43) Date of publication:
31.12.2025 Bulletin 2026/01

(21) Application number: 25168489.0

(22) Date of filing: 04.04.2025

(51) International Patent Classification (IPC):
*C04B 28/02* (2006.01) *C04B 40/00* (2006.01)

(52) Cooperative Patent Classification (CPC):
(C-Sets available)
C04B 40/0039; C04B 28/02 (Cont.)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 28.06.2024 TW 113124435

(71) Applicant: COCOONCO2 Pte. Ltd.
104084 Taipei City (TW)

(72) Inventor: FAN, Chiu-Tsu
104084 Taipei City (TW)

(74) Representative: Kuhnen & Wacker
Patent- und Rechtsanwaltsbüro PartG mbB
Prinz-Ludwig-Straße 40A
85354 Freising (DE)

# (54) ADDITIVE, CEMENT-BASED COMPOSITION CONTAINING THE ADDITIVE, AND METHODS OF USING THE SAME

(57) A cement-based composition and a method of using the same are provided. The cemented-based composition includes a cement-based cementitious material, aggregates, and water. The cement-based cementitious material includes cement and an additive. The additive includes kaolinite, a first carbonyl compound, and a pH buffer. The first carbonyl compound includes ethylene carbonate. The pH buffer includes ethylene carbonate and ethanolamine.

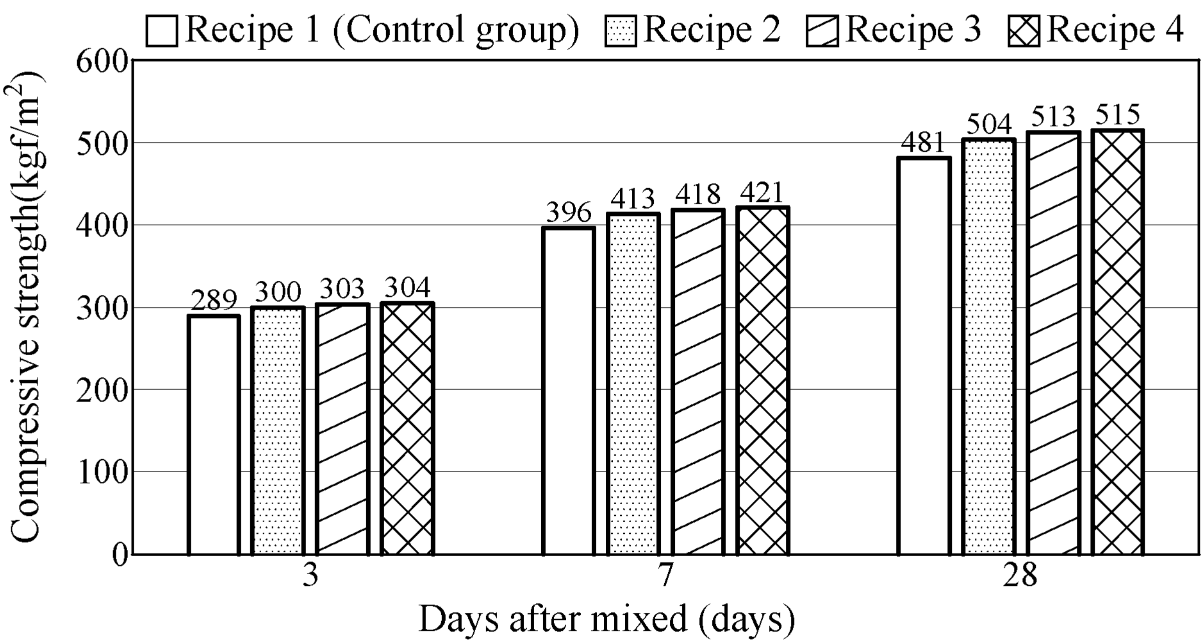


FIG. 1

EP 4 671 223 A1

(52) Cooperative Patent Classification (CPC): (Cont.)

C-Sets
**C04B 28/02, C04B 14/106, C04B 22/10,**
**C04B 24/121;**
**C04B 28/02, C04B 18/141, C04B 14/106,**
**C04B 22/10, C04B 24/121;**
**C04B 40/0039, C04B 14/106, C04B 22/10,**
**C04B 24/121**

## Description

## BACKGROUND

### Technical Field

The instant disclosure relates to an additive, a cement-based composition containing the additive, and methods of using the same.

### Related Art

Cement or cement-based materials can be used for various construction concrete, cement-based mortar, mud materials, gypsum products, etc. However, the production of the cement or cement-based materials is quite energy-consuming. Specifically, approximately 0.9-1 metric ton of carbon dioxide would be generated for every metric ton of cement produced. Nevertheless, the cement or cement-based materials are indispensable building materials. Therefore, how to reduce carbon emissions from the existing cement or cement-based materials so as to slow down the impact on the environment is one of the technical problems to be solved in the instant disclosure.

Furthermore, as mentioned above, since the cement or cement-based materials are indispensable building materials, specific design strength requirements are often needed to be met. Therefore, in addition to slowing down the impact on the environment, the strength requirements of the cement or cement-based materials used as building materials should also be taken into consideration during the development of the above-mentioned technologies to reduce carbon emissions.

Moreover, although the green cement containing limestone ($CaCO_3$) can use fine grinding (e.g., the specific surface area of the green cement is grinded from 3,700 $m^2/g$ to 5,100 $m^2/g$) to increase the early compressive strength of the green cement, but the late compressive strength of the green cement still cannot be improved to exceed that of the Portland cement known to the inventor. Therefore, it is still difficult for the green cement to be further used to applications with relatively higher compressive strength requirements.

## SUMMARY

In view of that the cement or cement-based materials are nowadays commonly-used and indispensable construction materials and in further view of the above-mentioned environmental problems and many shortcomings in practical applications, how to improve the existing cement or cement-based materials to provide more environmentally-friendly cement or cement-based material (e.g., Type I Portland cement), with the early and/or late compressive strength thereof further improved at the same time, is a technical problem to be solved in the art and also one of the technical problems to be solved of the instant disclosure.

In light of this, an additive according to some embodiments of the instant disclosure is provided. The additive comprises kaolinite, a first carbonyl compound, and a pH buffer. The first carbonyl compound comprises at least one selected from the group consisting of a compound represented by Formula (I) and a compound represented by Formula (II), wherein $R^1$ and $R^2$ are independently $C_1$-$C_5$-alkyl; A and B are independently selected from the group consisting of C, N, O, and S; and the five-membered ring of the first carbonyl compound may be unsubstituted or optionally substituted by one or more $C_1$-$C_5$-alkyl groups.

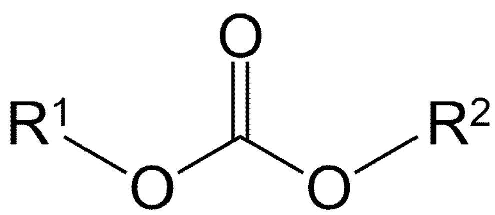

Formula (I)

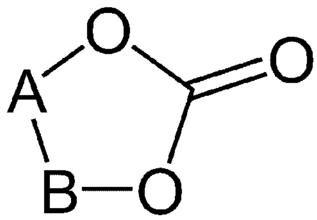

Formula (II)

The pH buffer comprises a second carbonyl compound and an amine compound. The second carbonyl compound comprises at least one selected from the group consisting of a compound represented by Formula (III) and a compound represented by Formula (IV), wherein $R^3$ and $R^4$ are independently $C_1$-$C_5$-alkyl; X and Y are independently selected from the group consisting of C, N, O, and S; and the five-membered ring of the second carbonyl compound may be unsubstituted or optionally substituted by one or more $C_1$-$C_5$-alkyl groups.

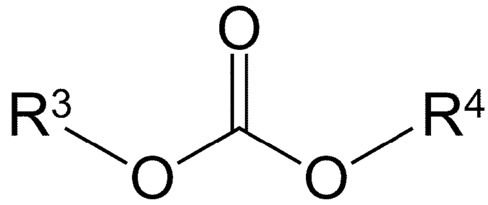

Formula (III)

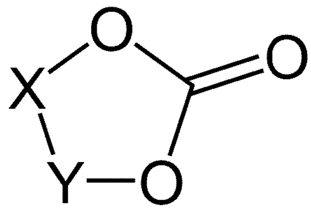

Formula (IV)

The amine compound comprises at least one selected from the group consisting of alkanolamines, diamines, and polyamines. The kaolinite is 0.06-4.995 parts by weight, the first carbonyl compound is 0.0001-2 parts by weight, and the pH buffer is $2\times10^{-9}$-$4\times10^{-2}$ parts by weight.

In some embodiments, the kaolinite is 0.35-1.99 parts by weight, the first carbonyl compound is 0.0025-0.6 parts by weight, and the pH buffer is $2.5\times10^{-7}$-$1.2\times10^{-2}$ parts by weight.

In some embodiments, a weight ratio of the pH buffer over the first carbonyl compound is 20-20,000 ppm.

Furthermore, a cement-based composition according to some embodiments of the instant disclosure is also provided. The cement-based composition comprises a cement-based cementitious material, aggregates, and water. The cement-based cementitious material comprises cement and the additive. The cement is 95-99.9 parts by weight, the additive is 0.1-5 parts by weight, the aggregates is 80-330 parts by weight, and the water is 25-63 parts by weight.

In some embodiments, the cement-based cementitious material further comprises slag, and an overall weight of the slag and the additive is 0.4-0.6 times a weight of the cement-based cementitious material.

In some embodiments, the cement is Type I Portland cement, limestone ($CaCO_3$) cement, or a combination thereof.

Moreover, a method of reducing a cement content in the cement-based composition is also provided. The method comprises adding the additive according to some embodiments to the cement-based composition. As compared with a cement content of a cement-based composition without adding the additive according to some embodiments, the cement content of the cement-based composition with adding the additive according to some embodiments is reduced.

In addition, a method of enhancing an early compressive strength, a late compressive strength, or both of the early compressive strength and the late compressive strength of the cement-based composition is further provided. The method comprises adding the additive according to some embodiments to the cement-based composition. As compared

with an early compressive strength, a late compressive strength, or both of the early compressive strength and the late compressive strength of a cement-based composition without adding the additive according to some embodiments, the early compressive strength, the late compressive strength, or both of the early compressive strength and the late compressive strength of the cement-based composition with adding the additive according to some embodiments is enhanced.

In some embodiments, a method of for solidifying the cement-based composition rapidly with an early compressive strength, a late compressive strength, or both of the early compressive strength and the late compressive strength of the cement-based composition maintained or relatively enhanced is also provided. The method comprises adding the additive according to some embodiments to the cement-based composition. As compared with an early compressive strength, a late compressive strength, or both of the early compressive strength and the late compressive strength of a cement-based composition without adding the additive according to some embodiments, the early compressive strength, the late compressive strength, or both of the early compressive strength and the late compressive strength of the cement-based composition with adding the additive according to some embodiments is maintained or enhanced.

## BRIEF DESCRIPTION OF THE DRAWINGS

The instant disclosure will become more fully understood from the detailed description given herein below for illustration only, and thus not limitative of the instant disclosure, wherein:

FIG. 1 shows test results of the early and late compressive strengths of the cement-based compositions of Recipe 1 to Recipe 4 shown in TABLE 10;

FIG. 2 shows test results of the early and late compressive strengths of the cement-based compositions of Recipe 5 to Recipe 8 shown in TABLE 11;

FIG. 3A to FIG. 3C respectively show test results of the 3-day, 7-day, and 28-day compressive strengths of the cement-based compositions of Recipe 1 to Recipe 4 and Recipe 5 to Recipe 8;

FIG. 4 shows test results of the early and late compressive strengths of the cement-based compositions of Recipe 9 to Recipe 11 shown in TABLE 12;

FIG. 5A to FIG. 5C respectively show test results of the 3-day, 7-day, and 28-day compressive strengths of the cement-based compositions of Recipe 5 to Recipe 7 and Recipe 9 to Recipe 11;

FIG. 6 shows test results of the early and late compressive strengths of the cement-based compositions of Recipe 12 to Recipe 14 shown in TABLE 13;

FIG. 7 shows test results of the early and late compressive strengths of the cement-based compositions of Recipe 1, Recipe 16, Recipe 4, and Recipe 15 shown in TABLE 14;

FIG. 8 shows test results of the early and late compressive strengths of the cement-based compositions of Recipe 1, Recipe 4, Recipe 17, and Recipe 18 shown in TABLE 15;

FIG. 9 shows test results of the early and late compressive strengths of the cement-based compositions of Recipe 19 to Recipe 22 shown in TABLE 16;

FIG. 10 shows test results of the early and late compressive strengths of the cement-based compositions of Recipe 19, Recipe 20, and Recipe 22 to Recipe 24 shown in TABLE 17;

FIG. 11 shows test results of the early and late compressive strengths of the cement-based compositions of Recipe 25, Recipe 20, and Recipe 26 to Recipe 28 shown in TABLE 18; and

FIG. 12 shows test results of the early and late compressive strengths of the cement-based compositions of Recipe 1, Recipe 23, Recipe 29, and Recipe 30 shown in TABLE 19.

## DETAILED DESCRIPTION

The term "cement-based composition(s)" used herein refers to any composition containing cement, such as cement and concrete containing cement, aggregates, and stones. The cement or the cement-based composition may be used in a wide range of applications such as building concrete, cement-based mortar, mud materials, and gypsum products, which is only illustrative and not limiting.

In some embodiments, an additive comprises kaolinite (which may be represented by a chemical formula of $Al_2O_3 \cdot 2SiO_2 \cdot 2H_2O$ or $Al_2Si_2O_5(OH)_4$), a first carbonyl compound, and a pH buffer.

The first carbonyl compound comprises at least one selected from the group consisting of a compound represented by Formula (I) and a compound represented by Formula (II), wherein $R^1$ and $R^2$ are independently $C_1$-$C_5$-alkyl; A and B are independently selected from the group consisting of C, N, O, and S; and the five-membered ring of the first carbonyl compound may be unsubstituted or optionally substituted by one or more $C_1$-$C_5$-alkyl groups.

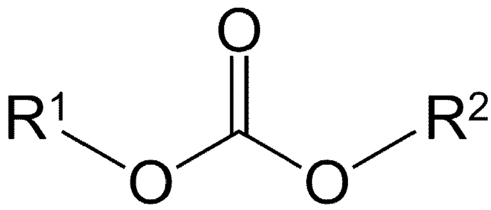

Formula (I)

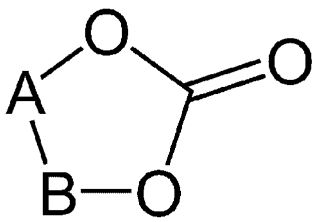

Formula (II)

The first carbonyl compound may be a carbonate ester compound. For example, as shown in TABLE 1 and TABLE 2, the first carbonyl compound may be at least one selected from the group consisting of methyl hydrogen carbonate, dimethyl carbonate (DMC), ethyl methyl carbonate (EMC), diethyl carbonate (DEC), dipropyl carbonate, dibutyl carbonate, ethylene carbonate (EC), and propylene carbonate (PC). In some embodiments, the first carbonyl compound comprises ethylene carbonate (EC).

TABLE 1: Examples of compounds of Formula (I)

| No. | Compounds of Formula (I) | $R^1$ | $R^2$ |
|---|---|---|---|
| 1 | methyl hydrogen carbonate | hydrogen | methyl |
| 2 | dimethyl carbonate (DMC) | methyl | methyl |
| 3 | ethyl methyl carbonate (EMC) | methyl | ethyl |
| 4 | diethyl carbonate (DEC) | ethyl | ethyl |
| 5 | dipropyl carbonate | propyl | propyl |
| 6 | dibutyl carbonate | butyl | butyl |

TABLE 2: Examples of compounds of Formula (II)

| No. | Compounds of Formula (II) | A | B | Substitution of five-membered ring |
|---|---|---|---|---|
| 1 | ethylene carbonate (EC) | C | C | - |
| 2 | propylene carbonate (PC) | C | C | A or B is substituted by methyl |

The pH buffer comprises a second carbonyl compound and an amine compound.

The second carbonyl compound may be a compound different from the first carbonyl compound, or may be a compound entirely or partly the same as the first carbonyl compound. Specifically, the second carbonyl compound comprises at least one selected from the group consisting of a compound represented by Formula (III) and a compound represented by Formula (IV), wherein $R^3$ and $R^4$ are independently $C_1$-$C_5$-alkyl; X and Y are independently selected from the group consisting of C, N, O, and S; and the five-membered ring of the second carbonyl compound may be unsubstituted or optionally substituted by one or more $C_1$-$C_5$-alkyl groups.

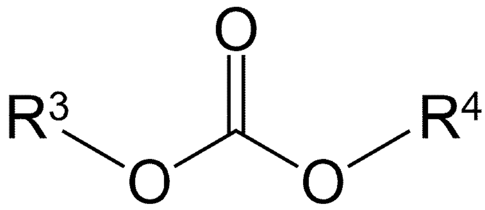

Formula (III)

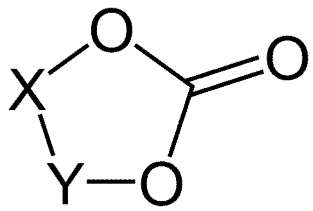

Formula (IV)

The second carbonyl compound may be a carbonate ester compound. For example, as shown in TABLE 3 and TABLE 4, the second carbonyl compound may be at least one selected from the group consisting of methyl hydrogen carbonate, dimethyl carbonate (DMC), ethyl methyl carbonate (EMC), diethyl carbonate (DEC), dipropyl carbonate, dibutyl carbonate, ethylene carbonate (EC), and propylene carbonate (PC). In some embodiments, the second carbonyl compound comprises ethylene carbonate (EC).

TABLE 3: Examples of compounds of Formula (III)

| No. | Compounds of Formula (III) | $R^3$ | $R^4$ |
|---|---|---|---|
| 1 | methyl hydrogen carbonate | hydrogen | methyl |
| 2 | dimethyl carbonate (DMC) | methyl | methyl |
| 3 | ethyl methyl carbonate (EMC) | methyl | ethyl |
| 4 | diethyl carbonate (DEC) | ethyl | ethyl |
| 5 | dipropyl carbonate | propyl | propyl |
| 6 | dibutyl carbonate | butyl | butyl |

TABLE 4: Examples of compounds of Formula (VI)

| No. | Compounds of Formula (VI) | X | Y | Substitution of five-membered ring |
|---|---|---|---|---|
| 1 | ethylene carbonate (EC) | C | C | - |
| 2 | propylene carbonate (PC) | C | C | X or Y is substituted by methyl |

The amine compound may be any compound having at least one of the following substituents: -NH group, $-NH_2$ group, and $-NH_3$ group. For example, the amine compound may be an organic amine with a straight chain, branched chain, and/or a ring skeleton. For example, the amine compound comprises at least one selected from the group consisting of alkanolamines, diamines, and polyamines. The alkanolamines may be, for example, aminomethanol, ethanolamine (ETA

or MEA), N-methylethanolamine (2-(methylamino)ethan-1-ol), diethanolamine (DEA or DEOA), triethylamine (TEA), or isopropanolamine (1-aminopropan-2-ol). The diamines may be, for example, ethylenediamine (EDA), N-hydroxyethyl ethanolamine (AEEA), piperazine (PIP), aminoethylpiperazine (AEP), 1-piperazine (1-(2-hydroxyethyl)piperazine, HEP), or isophorone diamine (IPDA). The polyamines may be, for example, diaminodiethylamine (DETA), or triethylenetetramine (TETA). For example, the amine compound may be at least one selected from the group consisting of aminomethanol, ethanolamine, N-methylethanolamine, diethanolamine, triethylamine, isopropanolamine, ethylenediamine, N-hydroxyethyl ethanolamine, piperazine, aminoethylpiperazine, 1-piperazine (1-(2-hydroxyethyl)piperazine, isophorone diamine, diaminodiethylamine, and triethylenetetramine. For example, the amine compound may comprise MEA.

In some embodiments, the amino group (i.e., -NH group, $-NH_2$ group, and/or $-NH_3$ group) on the amine compound can react with the second carbonyl compound (e.g., $R^3$ or $OR^3$ of the compound of Formula (III), and/or $R^4$ or $OR^4$ of the compound of Formula (III); or for example, X or OX of the compound of Formula (IV) after the compound of Formula (IV) undergoes a ring-opening reaction, and/or Y or OY of the compound of Formula (IV) after the compound of Formula (IV) undergoes a ring-opening reaction) to form, for example, bicarbonates (or hydrogencarbonates), carbamates, and/or carbamic acids. Each of the bicarbonates, carbamates, and carbamic acids has at least one -O-(C=O)- group, and compounds formed therefrom are relatively more stable. Therefore, according to some embodiments, through stably forming compounds having -O-(C=O)- groups, cement-based compositions (i.e., cementitious compositions, which will be described in detail later) with amine compounds added can effectively perform carbon capture and carbon fixation (in the form of carbon dioxide), thereby preventing carbon (in the form of carbon dioxide) from re-escaping and being emitted into the environment. Accordingly, in some embodiments, the cement-based composition has the ability to carbon reduction, carbon sequestration, and carbon fixation, which will be described in detail later.

In some embodiments, prior to being added to the cement-based composition, the second carbonyl compound and the amine compound in the pH buffer first undergo the reaction of at least one selected from the group consisting of Scheme 1, Scheme 2, and Scheme 3 to form the reaction product.

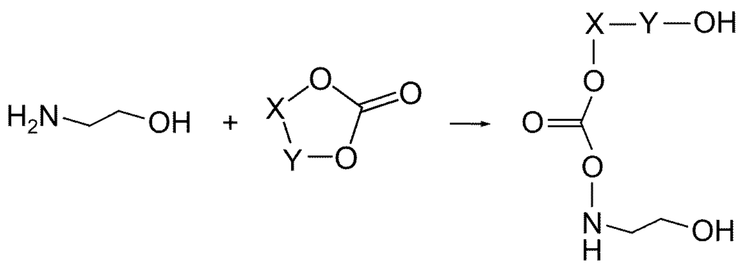

(Scheme 1)

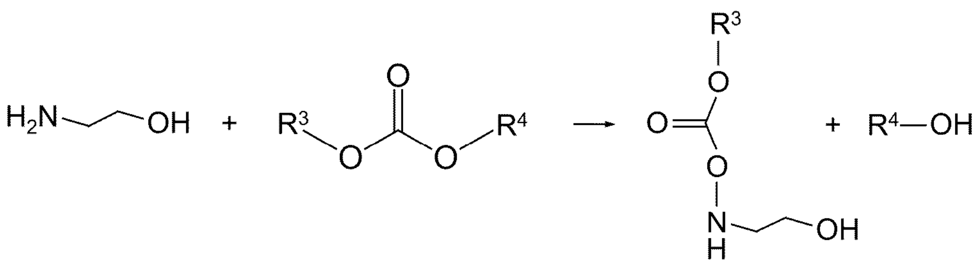

(Scheme 2)

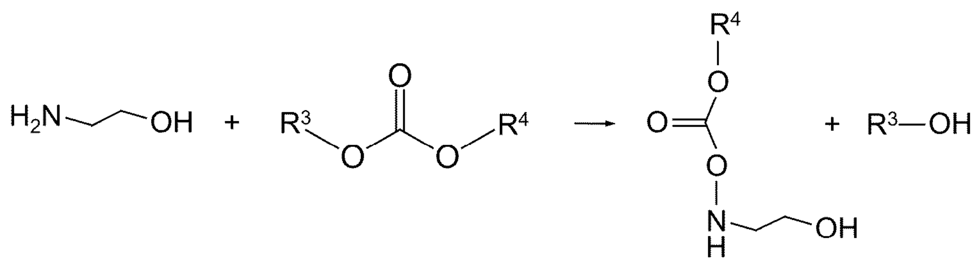

(Scheme 3)

The options for the X, Y, $R^3$, and $R^4$ can be referred to the aforementioned paragraph, which is thus not further described in detail herein. The reaction product may be a solid, for example, and can be further formed into solid particles, powder or a combination thereof in accordance to different demands.

In terms of the weight composition, in the additive, the kaolinite is 0.06-4.995 parts by weight, the first carbonyl

compound is 0.0001-2 parts by weight, and the pH buffer is $2\times10^{-9}$-$4\times10^{-2}$ parts by weight.

In some embodiments, in the additive, the kaolinite is 0.35-1.99 parts by weight, the first carbonyl compound is 0.0025-0.6 parts by weight, and the pH buffer is $2.5\times10^{-7}$-$1.2\times10^{-2}$ parts by weight.

In some embodiments, a weight ratio of the kaolinite over the first carbonyl compound is 6:4-99.9:0.1. For example, the weight ratio of the kaolinite over the first carbonyl compound is selected from the group consisting of 60:40, 65:35, 70:30, 75:25, 80:20, 85:15, 90:10, 95:5, 99:1, 99.5:0.5, 99.9:0.1, and 99.99:0.01.

In some embodiments, a weight ratio of the pH buffer over the first carbonyl compound is 20-20,000 ppm. In some other embodiments, a weight ratio of the pH buffer over the first carbonyl compound is 100-20,000 ppm. For example, the weight ratio of the pH buffer over the first carbonyl compound is selected from the group consisting of 20 ppm, 50 ppm, 100 ppm, 200 ppm, 300 ppm, 400 ppm, 500 ppm, 600 ppm, 700 ppm, 800 ppm, 900 ppm, 1,000 ppm, 1,500 ppm, 2,000 ppm, 2,500 ppm, 3,000 ppm, 3,500 ppm , 4,000 ppm, 4,500 ppm, 5,000 ppm, 5,500 ppm, 6,000 ppm, 6,500 ppm, 7,000 ppm, 7,500 ppm, 8,000 ppm, 8,500 ppm, 9,000 ppm, 9,500 ppm, 10,000 ppm, 11,000 ppm, 12,000 ppm m, 13,000 ppm, 14,000 ppm, 15,000 ppm, 16,000 ppm, 17,000 ppm, 18,000 ppm, 19,000 ppm, and 20,000 ppm. In some embodiments, when the weight ratio of the pH buffer over the first carbonyl compound does not fall within the above weight ratio range (e.g., less than 20 ppm or more than 20,000 ppm), it would be difficult or unable for the additive to achieve the desired effect. For example, if the additive is further used in a cement-based composition, it would be difficult or unable for the cement-based composition to achieve an apparent improvement in the early compressive strength and/or the late compressive strength.

In some embodiments, the additive may be further added to the cement-based composition. For example, in some embodiments, a cement-based composition comprises a cement-based cementitious material, aggregates, and water; and the cement-based cementitious material comprises cement and the additive. In terms of the weight composition, in the cement-based cementitious material, the cement is 95-99.9 parts by weight and the additive is 0.1-5 parts by weight, while the aggregates is 80-330 parts by weight and the water is 25-63 parts by weight. In some embodiments, in the cement-based cementitious material, the cement is 98-99.5 parts by weight and the additive is 0.5-2 parts by weight, while the aggregates is 100-275 parts by weight and the water is 27-48 parts by weight.

The cement may be Portland cement that complies with the specification of National Standard of the Republic of China (R.O.C.) (which is the same as below and will not be described repeatedly herein) CNS 61 [Portland cement] (corresponding to ASTM C150), such as Type I or Air Entraining Type IA Portland cement or Type II or Air Entraining Type IIA Portland cement. In some embodiments, the cement is Type I Portland cement that complies with the specification of CNS 61 (corresponding to ASTM C150). Alternatively, in some other embodiments, the cement may be a cement containing limestone ($CaCO_3$; i.e., calcium carbonate) or a cement containing both Portland cement and limestone.

In some embodiments, the weight of the cement is 0.95-0.999 times the weight of the cement-based cementitious material. In some other embodiments, the weight of the cement is 0.98-0.995 times the weight of the cement-based cementitious material. For example, a weight ratio of the cement over the cement-based cementitious material is one selected from the group consisting of 0.950, 0.955, 0.960, 0.965, 0.970, 0.975, 0.980, 0.985, 0.990, 0.991, 0.992, 0.993, 0.994, 0.995, 0.996, 0.997, 0.998, and 0.999. In some embodiments, when the weight ratio of the cement over the cement-based cementitious material does not fall within the above weight ratio range (e.g., less than 0.950 times), it would be difficult or unable for the additive to achieve the desired effect. For example, if the additive is further used in a cement-based composition, it would be difficult or unable for the cement-based composition to achieve an apparent improvement in the early compressive strength and/or the late compressive strength.

The aggregates (or called sand and gravel) may not contain stones or may further contain stones. The aggregates (or called sand and gravel) may be aggregates that comply with the specification of CNS 1240 [Concrete aggregates] (corresponding to ASTM C33) and/or CNS 3691 [Lightweight aggregates for structural concrete] (corresponding to ASTM C330), such as fine aggregates (or called fine aggregates), coarse aggregates (or called coarse aggregates), and Type 1 Sub-base (e.g., the particle size thereof is about 5-10 mm or 10-20 mm).

In some embodiments, the weight of the aggregates (denoted as "A") is 0.8-3.3 times the weight of the cement-based cementitious material (denoted as "C"). In some other embodiments, the weight of aggregates (A) is 1-2.75 times the weight of the cement-based cementitious material (C). For example, the weight ratio of the aggregates over the cement-based cementitious material (denoted as "A/C") is selected from the group consisting of 0.80, 0.85, 0.90, 0.95, 1.00, 1.05, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3.00, 3.05, 3.10, 3.15, 3.20, 3.25, and 3.30. In some embodiments, when the weight ratio of the aggregates over the cement-based cementitious material (A/C) does not fall within the above weight ratio range (e.g., less than 0.80 times, or greater than 3.30 times), it would be difficult or unable for the additive to achieve the desired effect. For example, if the additive is further used in a cement-based composition, it would be difficult or unable for the cement-based composition to achieve an apparent improvement in the early compressive strength and/or the late compressive strength.

The water may be mixing water that complies with the specification of CNS 13961 [Mixing water of concrete] (corresponding to ASTM C1602).

In some embodiments, the weight of the water (denoted as "W") is 0.25-0.63 times the weight of the cement-based cementitious material (denoted as "C"). In some other embodiments, the weight of the water (W) is 0.27-0.48 times the weight of the cement-based cementitious material (C). For example, the weight ratio of the water over the cement-based cementitious material (denoted as "W/C") is selected from the group consisting of 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0 .49, 0.50, 0.51, 0.52, 0.53, 0.54, 0.55, 0.56, 0.57, 0.58, 0.59, 0.60, 0.61, 0.62, and 0.63. In some embodiments, when the weight ratio of the water over the cement-based cementitious material (W/C) does not fall within the above weight ratio range (e.g., less than 0.25 times, or greater than 0.63 times), it would be difficult or unable for the additive to achieve the desired effect. For example, if the additive is further used in a cement-based composition, it would be difficult or unable for the cement-based composition to achieve an apparent improvement in the early compressive strength and/or the late compressive strength.

In some embodiments, the cement-based composition further comprises slag. The slag may be blast-furnace (BF) slag (e.g., granulated (water quenched) blast furnace (BF) slag) such as BF slag that complies with the specification of CNS 12223 [Granulated (Water quenched) blast furnace slag] (corresponding to ASTM C989) and/or CNS 12549 [Ground granulated blast-furnace slag for use in concrete and mortars] (corresponding to ASTM C989). The slag is usually used to replace the cement to increase the late compressive strength (e.g., the 28-day compressive strength) of the composition. Therefore, the weight of the added slag usually corresponds to the weight of the cement to be replaced; for example, the slag is added to the cement-based composition by the same weight as the cement to be replaced.

In some embodiments, the overall weight of the slag and the additive is 0.4-0.6 times the weight of the cement-based cementitious material. In some other embodiments, the overall weight of the slag and the additive is 0.5 times the weight of the cement-based cementitious material. For example, the weight ratio of the overall weight of the slag and the additive over the weight of the cement-based cementitious material is selected from the group consisting of 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, and 0.60. In some embodiments, when the weight ratio of the overall weight of the slag and the additive over the cement-based cementitious material does not fall within the above weight ratio range (e.g., less than 0.4 times, or greater than 0.6 times), it would be difficult or unable for the cement-based composition to achieve an apparent improvement in the early compressive strength and/or the late compressive strength.

In some embodiments, the weight of the slag is 0.45-0.499 times the weight of the cement-based cementitious material, and the weight of the additive is 0.001-0.05 times the weight of the cement-based cementitious material. In some other embodiments, the weight of the slag is 0.485-0.495 times the weight of the cement-based cementitious material, and the weight of the additive is 0.005-0.015 times the weight of the cement-based cementitious material. For example, the weight ratio of the slag over the cement-based cementitious material is selected from the group consisting of 0.450, 0.455, 0.460, 0.465, 0.470, 0.475, 0.480, 0.485, 0.490, 0.495, 0.496, 0.497, 0.498, and 0.499; and the weight ratio of the additive over the cement-based cementitious material is selected from the group consisting of 0.001, 0.002, 0.003, 0.004, 0.005, 0.006, 0.007, 0.008, 0.009, 0.010, 0.015, 0.020, 0.025, 0.030, 0.035, 0.040, 0.045, and 0.050. In some embodiments, when the weight ratio of the slag over the cement-based cementitious material does not fall within the above weight ratio range (e.g., less than 0.45 times, or greater than 0.499 times) and/or the weight ratio of the additive over the cement-based cementitious material does not fall within the above weight ratio range (e.g., greater than 0.05 times), it would be difficult or unable for the cement-based composition to achieve an apparent improvement in the early compressive strength and/or the late compressive strength.

As mentioned above, adding slag to the cement-based composition will usually increase the late compressive strength of the cement-based composition (e.g., the 28-day compressive strength). However, adding slag will also reduce the early compressive strength of the cement-based composition (e.g., the 3-day or 7-day compressive strength). The reason is that the commonly-used cement usually undergoes hydration (i.e., hydration reaction) to provide the early compressive strength for the cement-based composition; nevertheless, because at the early stage of addition, a water-impermeable film will be formed on the particle surface of the slag, thereby increasing the reaction energy barrier of the hydration. Hence, the amount of the generated catalysts (e.g., calcium hydroxide ($Ca(OH)_2$) and gypsum ($CaSO_4 \cdot 2H_2O$)) is relatively reduced so that the hydration rate of the slag is slower than that of the commonly-used cement. As a result, with the addition of slag, the early compressive strength (e.g., the 3-day or 7-day compressive strength) of the cement-based composition would only be provided by the compressive strength resulting from the hydration of the remaining cement that is not replaced by the slag. Consequently, the early compressive strength of the cement-based composition with the addition of slag will be less than that of the cement-based composition without the addition of slag (e.g., the cement-based composition with none of the cement thereof being replaced by slag).

In some embodiments, even though the early compressive strength (e.g., the 3-day or 7-day compressive strength) of the cement-based composition would be decreased due to the addition of slag, once the cement-based composition contains the additives according to some embodiments, the early compressive strength of the cement-based composition can be apparently increased and even greater than that of the cement-based composition with the cement thereof partly replaced by the slag (but without the addition of the additives according to some embodiments).

Moreover, in some embodiments, compared with the late compressive strength (e.g., the 28-day compressive strength) of the cement-based composition with the cement thereof partly replaced by the slag (but without the addition of

the additives according to some embodiments), once the cement-based composition contains the additives according to some embodiments, the late compressive strength of the cement-based composition can further be apparently increased and thus greater than that of the cement-based composition with the cement thereof partly replaced by the slag (but without the addition of the additives according to some embodiments).

As above, the additive according to some embodiments can produce a synergistic effect with the slag in the cement-based composition, thereby achieving a relatively higher early compressive strength (e.g., the 3-day or 7-day compressive strength) and/or a relatively higher late compressive strength (e.g., the 28-day compressive strength) of the cement-based composition.

In some embodiments, the cement-based composition further comprises a water reducing agent (or called plasticizer). The water reducing agent may comprise various air-entraining admixtures that comply with the specification of CNS 3091 [Air-entraining admixtures for concrete] (corresponding to ASTM C260) and various chemical admixtures that comply with the specification of CNS 12283 [Chemical admixtures for concrete] (corresponding to ASTM C494). In some embodiments, the water reducing agent comprises a water reducing agent that complies with the specification of CNS 12833 [Chemical admixtures for use in producing flowing concrete] (including Type A water reducing agent, Type B retarder, Type C early strength agent, Type D water reducing retarder, Type E water-reducing early-strength agent, Type F high-performance water reducing agent (or superplasticizer), and Type G high-performance water reducing retarder) (corresponding to ASTM C1017). In some embodiments, the water reducing agent comprises polycarboxylate ether (PCE).

In some embodiments, the water reducing agent is 64-96 parts by weight. In some embodiments, the weight of the water reducing agent is 0.64-0.96 times the weight of the cement-based cementitious material. In some other embodiments, the weight of the water reducing agent is 0.8 times the weight of the cement-based cementitious material. For example, the weight ratio of the water reducing agent over the cement-based cementitious material is selected from the group consisting of 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0 .88, 0.89, 0.90, 0.91, 0.92, 0.93, 0.94, 0.95, and 0.96. In some embodiments, when the weight ratio of the water reducing agent over the cement-based cementitious material does not fall within the above weight ratio range (e.g., less than 0.64 times or greater than 0.96 times), it will be difficult or unable for the cement-based composition to achieve an apparent improvement in the early compressive strength and/or the late compressive strength.

As an illustrative description, the part-by-weight proportion of each component in the cement-based composition can be referred to Examples shown in TABLE 5, TABLE 6, and/or TABLE 7.

TABLE 5: The part-by-weight proportions of components in the cement-based compositions according to some embodiments

| **Components** | | **Adding ratio (parts by weight)** |
|---|---|---|
| Cementitious material | Cement | 100 |
| | Additive | |
| Aggregates | | 80-330 |
| Water | | 25-63 |
| Water reducing agent | | 64-96 |

TABLE 6: The part-by-weight proportions of components in the cement-based compositions according to some embodiments

| **Components** | | **Adding ratio (parts by weight)** |
|---|---|---|
| Cementitious material | Cement | 95-99.9 |
| | Additive | 0.1-5 |
| Aggregates | | 80-330 |
| Water | | 25-63 |
| Water reducing agent | | 64-96 |

TABLE 7: The part-by-weight proportions of components in the cement-based compositions according to some embodiments

| Components | | Adding ratio (parts by weight) |
|---|---|---|
| Cementitious material | Cement | 98-99.5 |
| | Additive | 0.5-2 |
| Aggregates | | 100-275 |
| Water | | 27-48 |
| Water reducing agent | | 80 |

As an illustrative description, the part-by-weight proportion of each component in the cement-based composition can be referred to Examples shown in TABLE 8 and/or TABLE 9.

TABLE 8: Corresponding to the cement-based compositions shown in TABLE 5 and TABLE 6, the part-by-weight proportions of components in the additive thereof

| Components | | Adding ratio (parts by weight) |
|---|---|---|
| Additive | Kaolinite | 0.06-4.995 |
| | First carbonyl compound | 0.0001-2 |
| | pH buffer | $2\times10^{-9}$-$4\times10^{-2}$ |

TABLE 9: Corresponding to the cement-based compositions shown in TABLE 5 and TABLE 7, the part-by-weight proportions of components in the additive thereof

| Components | | Adding ratio (parts by weight) |
|---|---|---|
| Additive | Kaolinite | 0.35-1.99 |
| | First carbonyl compound | 0.0025-0.6 |
| | pH buffer | $2.5\times10^{-7}$-$1.2\times10^{-2}$ |

Cement (e.g., Type I Portland cement) is made by heating calcium carbonate ($CaCO_3$) and calcium oxide (CaO) or shale to, for example, 1,450 °C. $CaCO_3$ will be converted into CaO (i.e., lime), while clay minerals will produce inorganic oxides such as aluminates, ferrites, and dicalcium silicate ($Ca_2SiO_4$, which is referred to as "C2S" herein). Aluminates and ferrites are further heated to be melted. CaO reacts with C2S to form tricalcium silicate ($Ca_3SiO_5$, which is referred to as "C3S" herein). As the mixture is cooled, tricalcium aluminate ($Ca_3Al_2O_6$, which is referred to as "C3A" herein) and tetracalcium aluminoferrite ($Ca_4Al_nFe_{(2-n)}O_7$, which is referred to as "C4AF" herein) would be crystallized from the melt, and the C3S and the remaining C2S would further undergo phase changes. The aforementioned four minerals (i.e., C2S, C3S, C3A, and C4AF) constitute the main part of the aforementioned cement.

In the cement known to the inventor, during the first few minutes of the hydration, aluminum and iron would react with gypsum ($CaSO_4 \cdot 2H_2O$) to form an amorphous gel on the surface of the cement particles and gradually form needle-like or short columnar ettringite ($Ca_6Al_2(SO_4)_3(OH)_{12} \cdot 26H_2O$; also known as trisulfide calcium sulphoaluminate hydrate, which is referred to as "AFt" herein). In some embodiments, since the cement-based composition comprises the aforementioned additive, aluminum (e.g., $Al(OH)_4^-$) and iron (e.g., $Fe^{3+}$) would be better dispersed on or around the surface of the cement particles (e.g., within the boundary layer of the cement particles) to further form gels and/or AFt with a better lattice structure arrangement. Because gel and/or AFt with a better lattice structure arrangement are formed rapidly during the initial period of the hydration, the cement-based composition containing the additive can have a more increased early compressive strength (e.g., the 3-day or 7-day compressive strength).

In addition, since aluminum is quite sensitive to the pH value (i.e., the acidic or alkaline environment) of the surrounding environment, the form of aluminum formed on or around the surface of the cement particles (e.g., within the boundary layer of the cement particles) will be varied according to different pH values of the surrounding environment. For example, in an acidic environment, aluminum would exist in the form of $Al^{3+}$, whereas in an alkaline environment, aluminum would exist in the form of $Al(OH)_4^-$. In some embodiments, because the cement-based composition comprises the additive, the amine compound in the additive can further act as a pH buffer to regulate the pH value on or around the surface of the cement particles, so that the pH value on or around the surface of the cement particles can be maintained in

an alkaline environment, allowing aluminum to exist in the reactive form of $Al(OH)_4^-$ so that the hydration can be conducted on or around the surface of the cement particles.

Then, after the initial period of reactivity, the hydration of cement slows down and enters the induction period. After about 3 hours, the induction period ends to begin the acceleration period. Within a period of 3-24 hours, about 30% of the cement would react and form $Ca(OH)_2$ and calcium-silicon-hydrate rigid gel (referred to as "C-S-H" herein) on the surface of the cement particles. After about 10 hours of hydration, C3S would generate "external C-S-H" from the surroundings of AFt (instead of forming "external C-S-H" directly from the surface of C3S of the cement particles). Therefore, in the initial period of reactivity, silicate ions (e.g., $(SiO_4)^{4-}$ or $H_2(SiO_4)^{2-}$) have to diffuse through the aluminum-enriched and iron-enriched boundary layer to form C-S-H in the boundary layer. At the final stage of the acceleration period, after about 18 hours of hydration, C3A continues to react with $CaSO_4 \cdot 2H_2O$ to form a longer columnar AFt. These AFt and C-S-H would generate a "hydrating shell" from the surface of anhydrous C3S.

In some embodiments, under suitable pH and temperature conditions, the -O-(C=O)-group in the first carbonyl compound (and/or in the second carbonyl compound of the pH buffer) will be broken due to the reaction, and the -O-(C=O)-group breaking from the first carbonyl compound and/or the pH buffer (i.e., corresponding to $\hat{C}=CO_2$ shown in the following Scheme 4 and Scheme 5) can be released to further participate in the following Scheme 4 and Scheme 5. In the following Scheme 4 and Scheme 5, $C_6A\hat{S}_3\hat{H}_{32}$=Aft, C=CaO, $\hat{A}=Al_2O_3$, $\hat{S}=SO_3$, and $\hat{H}=H_2O$.

$$C_6\hat{A}\hat{S}_3\hat{H}_{32} + 3\hat{C} \rightarrow 3C\hat{C} + 3C\hat{S}\hat{H}_2 + \hat{A}\hat{H}_x + (26-x)\hat{H} \qquad \text{(Scheme 4)}$$

$$C_6\hat{A}\hat{S}_3\hat{H}_{32} + 3\hat{C} \rightarrow 3C\hat{C} + 3C\hat{S}\hat{H}_{1/2} + \hat{A}\hat{H}_3 + 27.5\hat{H} \qquad \text{(Scheme 5)}$$

In some embodiments, AFt (i.e., $C_6\hat{A}\hat{S}_3\hat{H}_{32}$ in the above Scheme 4 and Scheme 5) can further react with the -O-(C=O)- group contained in the first carbonyl compound and/or in the second carbonyl compound of the pH buffer or the -O-(C=O)- group breaking and released therefrom, for example, according to the above Scheme 4 and Scheme 5, to further generate a large amount of water (i.e., $\hat{H}$ in the above Scheme 4 and Scheme 5). The large amount of the generated water can prevent the hydration from termination due to water starvation. Instead, the large amount of the generated water would continue the hydration and further form a C-S-H gel. It is realized that, the compressive strength of the cement known to the inventor mainly depends on the C-S-H gel. Therefore, in some embodiments, since the C-S-H gel can be continuously formed in the initial stage of the hydration, the provided cement-based composition can have a much better compressive strength (including the early compressive strength (e.g., the 3-day or 7-day compressive strength)).

Then, after about 1-3 days, the hydration would slow down and enter a deceleratory period. C3A reacts with AFt to form monosulfide calcium sulphoaluminate hydrate ($Ca_4Al_2O_6(SO_4) \cdot 12H_2O$ or $Ca_4Al_2O_6(SO_4) \cdot 14H_2O$, which is referred to as "AFm" herein). In addition, AFm (represented by $C_4\hat{A}\hat{C}\hat{H}_{11}$ in the following Scheme 6) can further undergo a reaction, for example, according to the following Scheme 6 to further generate a large amount of water (i.e., $\hat{H}$ in the following Scheme 6). As defined in the above Scheme 4 and Scheme 5, in the following Scheme 6, C=CaO, $\hat{A}=Al_2O_3$, $\hat{S}=SO_3$, $\hat{H}=H_2O$, and $\hat{C}=CO_2$. As mentioned above, the large amount of the generated water can also be used to prevent the hydration from termination due to water starvation. Therefore, in some embodiments, since the C-S-H gel can be continuously formed in the initial stage of the hydration (and even to the final stage of the deceleratory period), the obtained cement-based composition can provide a much better compressive strength (including the early and late compressive strengths (e.g., the 3-day, 7-day, and 28-day compressive strengths)).

$$C_4\hat{A}\hat{C}\hat{H}_{11} + 3\hat{H}\hat{C} \rightarrow 4C\hat{C} + \hat{A}\hat{H}_3 + 11\hat{H} \qquad \text{(Scheme 6)}$$

To more clearly demonstrate the implementation of the instant disclosure, the following specific embodiments are only described for illustrative purposes; therefore, it should be understood that the specific embodiments are not intended to limit the scope of the instant disclosure.

**Example 1: Preparation of Additive and Cement-Based Composition**

**1.1 Experimental Materials**

The experimental materials used in this Example include the followings:

(1) Cement: Type I Portland cement that complies with the specification of CNS 61 (corresponding to ASTM C150), purchased from Taiwan Cement Corporation (TCC); or Portland Limestone Cement (IL) that complies with the specification of CNS 15286 (corresponding to ASTM C1157), referred to the Green Cement in the following webpage: https://www.taiwancement.com/tw/lowCarbonProduct.html.

(2) Slag: Blast-furnace (BF) slag that complies with the specification of CNS 12223 (corresponding to ASTM C989) and CNS 12549 (corresponding to ASTM C989), purchased from CHC Resources Corporation (CHC Resources).

(3) Kaolinite: Kaolinite (calcined) that complies with the specification of CAS 92704-41-1, purchased from KaMin LLC.

(4) First carbonyl compound: Ethylene carbonate (EC), purchased from Oriental Union Chemical Corporation (OUCC).

(5) Second carbonyl compound: Ethylene carbonate (EC), purchased from OUCC.

(6) Amine compound: Ethanolamine (ETA or MEA, purchased from BASF), ethylenediamine (EDA, purchased from BASF), diaminodiethylamine (DETA, purchased from BASF), piperazine (PIP, purchased from BASF), aminoethylpiperazine (AEP, purchased from BASF), 1-piperazine HEP, purchased from BASF), and N-hydroxyethyl ethanolamine (AEEA, purchased from BASF).

(7) Aggregates (or called aggregates and gravel): Aggregates that comply with the specification of CNS 1240 (corresponding to ASTM C33) and CNS 3691 (corresponding to ASTM C330), including fine aggregates, coarse aggregates, and Type 1 Sub-base, from Jhuoshuei River, Ligang River, and Dajia River of R.O.C. (Taiwan), respectively.

(8) Water: Tap water that complies with the specification of CNS 13961 (corresponding to ASTM C1602).

(9) Water reducing agent: Polycarboxylate ether (PCE) that complies with the specification of CNS 12283 (corresponding to ASTM C494) and CNS 12833 (corresponding to ASTM C1017), purchased from Ching-Tai Resins Chemical Co., Ltd.

### 1.2 Recipe and Proportions of Additives and Cement-Based Compositions

The term "design compressive strength" (also referred to as "design strength") used herein refers to the design strength of structural members made of structural cement-based compositions (e.g., concrete) that is sufficient to withstand the design load obtained by a strength design method, and the detailed definition of the term "design compressive strength" can be referred to Chapter 2 (Analysis and Design) of "Code for Design of Concrete Structures" published by National Land Management Agency (NLMA; reformed from the prior Construction and Planning Agency), Ministry of the Interior (MOI), R.O.C.

The design compressive strengths of the cement-based compositions used in the following Examples were 280 kgf/$cm^2$ (i.e., 4,000 psi), and Recipes of the cement-based compositions could be referred to Recipe 1 to Recipe 25 as shown in the following TABLE 10 to TABLE 17.

It is noted that, the "weight ratio of water over cement-based cementitious material (W/C)" of each Recipe is defined in Equation 1, and the "weight ratio of aggregates over cement-based cementitious material (A/C)" is defined in Equation 2.

$$W/C = \frac{\text{Weight of Water}}{\text{Weight of Cement-Based Cementitious Material}} \qquad \text{(Equation 1)}$$

$$A/C = \frac{\text{Weight of Aggregates}}{\text{Weight of Cement-Based Cementitious Material}} \qquad \text{(Equation 2)}$$

TABLE 10: Part-by-weight proportions of components in cement-based compositions of Recipe 1 to Recipe 4

| Components \ No. of Recipe | | 1 | 2 | 3 | 4 |
|---|---|---|---|---|---|
| Cement-based cementitious material | Portland cement | 100.0 | 99.5 | 99.0 | 98.0 |
| | Additive | 0.0 | 0.5 | 1.0 | 2.0 |
| Water | | 48 | | | |
| Aggregates | | 275 | | | |
| Weight ratio of water over cement-based cementitious material (W/C) | | 0.48 | | | |
| Weight ratio of aggregates over cement-based cementitious material (A/C) | | 2.75 | | | |
| Additive | Kaolinite (Proportion of kaolinite in the additive) | - | 0.4 (80%) | 0.8 (80%) | 1.6 (80%) |
| | First carbonyl compound (EC) (Proportion of First carbonyl compound in the additive) | - | 0.1 (20%) | 0.2 (20%) | 0.4 (20%) |
| | pH buffer (EC+MEA) (Weight ratio of pH buffer over the first carbonyl compound) | - | 100 ppm | | |

(Note: If no unit is specifically marked, each unit in the above TABLE is "parts by weight".)

TABLE 11: Part-by-weight proportions of components in cement-based compositions of Recipe 5 to Recipe 8

| Components \ No. of Recipe | 5 | 6 | 7 | 8 |
|---|---|---|---|---|

| | | | | | |
|---|---|---|---|---|---|
| Cement-based cementitious material | Portland cement | 100.0 | 99.5 | 99.0 | 98.0 |
| | Additive | 0.0 | 0.5 | 1.0 | 2.0 |
| Water | | 48 | | | |
| Aggregates | | 100 | | | |
| Weight ratio of water over cement-based cementitious material (W/C) | | 0.48 | | | |
| Weight ratio of aggregates over cement-based cementitious material (-A/C) | | 1.00 | | | |
| Additive | Kaolinite (Proportion of kaolinite in the additive) | - | 0.4 (80%) | 0.8 (80%) | 1.6 (80%) |
| | First carbonyl compound (EC) (Proportion of first carbonyl compound in the additive) | - | 0.1 (20%) | 0.2 (20%) | 0.4 (20%) |
| | pH buffer (EC+MEA) (Weight ratio of pH buffer over the first carbonyl compound) | - | 100 ppm | | |

(Note: If no unit is specifically marked, each unit in the above TABLE is “parts by weight”.)

TABLE 12: Part-by-weight proportions of components in cement-based compositions of Recipe 9 to Recipe 11

| Components \ No. of Recipe | | 9 | 10 | 11 |
|---|---|---|---|---|
| Cement-based cementitious material | Portland cement | 100.0 | 99.5 | 99.0 |
| | Additive | 0.0 | 0.5 | 1.0 |
| Water | | 27 | | |
| Aggregates | | 100 | | |
| Water reducing agent | | 0.8 | | |
| Weight ratio of water over cement-based cementitious material (W/C) | | 0.27 | | |
| Weight ratio of aggregates over cement-based cementitious material (A/C) | | 1.00 | | |
| Additive | Kaolinite (Proportion of kaolinite in the additive) | - | 0.4 (80%) | 0.8 (80%) |
| | First carbonyl compound (EC) (Proportion of first carbonyl compound in the additive) | - | 0.1 (20%) | 0.2 (20%) |
| | pH buffer (EC+MEA) (Weight ratio of pH buffer over the first carbonyl compound) | - | 100 ppm | |

(Note: If no unit is specifically marked, each unit in the above TABLE is “parts by weight”.)

TABLE 13: Part-by-weight proportions of components in cement-based compositions of Recipe 12 to Recipe 14

| Components \ No. of Recipe | | 12 | 13 | 14 |
|---|---|---|---|---|
| Cement-based cementitious material | Portland cement | 100.0 | 99.5 | 99.0 |
| | Additive | 0.0 | 0.5 | 1.0 |
| Water | | 60 | | |
| Aggregates | | 183 | | |
| Weight ratio of water over cement-based cementitious material (W/C) | | 0.60 | | |
| Weight ratio of aggregates over cement-based cementitious material (A/C) | | 1.83 | | |
| Additive | Kaolinite (Proportion of kaolinite in the additive) | - | 0.4 (80%) | 0.8 (80%) |
| | First carbonyl compound (EC) (Proportion of first carbonyl compound in the additive) | - | 0.1 (20%) | 0.2 (20%) |
| | pH buffer (EC+MEA) (Weight ratio of pH buffer over the first carbonyl compound) | - | 100 ppm | |

(Note: If no unit is specifically marked, each unit in the above TABLE is “parts by weight”.)

TABLE 14: Part-by-weight proportions of components in cement-based compositions of Recipe 1, Recipe 16, Recipe 4, and Recipe 15

| Components \ No. of Recipe | | 1 | 16 | 4 | 15 |
|---|---|---|---|---|---|
| Cement-based cementitious material | Portland cement | 100.0 | 98.0 | 98.0 | 98.0 |
| | Additive | 0.0 | 2.0 | 2.0 | 2.0 |
| Water | | 48 | | | |
| Aggregates | | 275 | | | |
| Weight ratio of water over cement-based cementitious material (W/C) | | 0.48 | | | |
| Weight ratio of aggregates over cement-based cementitious material (A/C) | | 2.75 | | | |
| Additive | Kaolinite (Proportion of kaolinite in the additive) | - | 1.4 (70%) | 1.6 (80%) | 1.8 (90%) |
| | First carbonyl compound (EC) (Proportion of first carbonyl compound in the additive) | - | 0.6 (30%) | 0.4 (20%) | 0.2 (10%) |
| | pH buffer (EC+MEA) (Weight ratio of pH buffer over the first carbonyl compound) | - | 100 ppm | | |

(Note: If no unit is specifically marked, each unit in the above TABLE is “parts by weight”.)

TABLE 15: Part-by-weight proportions of components in cement-based compositions of Recipe 1, Recipe 4, Recipe 17, and Recipe 18

| Components \ No. of Recipe | | 1 | 4 | 17 | 18 |
|---|---|---|---|---|---|
| Cement-based cementitious material | Portland cement | 100.0 | 98.0 | 98.0 | 98.0 |
| | Additive | 0.0 | 2.0 | 2.0 | 2.0 |
| Water | | 48 | | | |
| Aggregates | | 275 | | | |

| | | | | | |
|---|---|---|---|---|---|
| Weight ratio of water over cement-based cementitious material (W/C) | | 0.48 | | | |
| Weight ratio of aggregates over cement-based cementitious material (A/C) | | 2.75 | | | |
| Additive | Kaolinite (Proportion of kaolinite in the additive) | - | 1.6 (80%) | 1.5998 (80%) | 1.5997 (80%) |
| | First carbonyl compound (EC) (Proportion of first carbonyl compound in the additive) | - | 0.4 (20%) | 0.4000 (20%) | 0.3999 (20%) |
| | pH buffer (EC+MEA) (Weight ratio of pH buffer over the first carbonyl compound) | - | 100 ppm | 10,000 ppm | 20,000 ppm |

(Note: If no unit is specifically marked, each unit in the above TABLE is “parts by weight”.)

TABLE 16: Part-by-weight proportions of components in cement-based compositions of Recipe 19 to Recipe 22

| Components \ No. of Recipe | | 19 | 20 | 21 | 22 |
|---|---|---|---|---|---|
| Cement-based cementitious material | Portland cement | 100.0 | 0.0 | 0.0 | 0.0 |
| | Limestone cement | 0.0 | 100.0 | 99.0 | 98.0 |
| | Additive | 0.0 | 0.0 | 1.0 | 2.0 |
| Water | | 48 | | | |
| Aggregates | | 275 | | | |
| Weight ratio of water over cement-based cementitious material (W/C) | | 0.48 | | | |
| Weight ratio of aggregates over cement-based cementitious material (A/C) | | 2.75 | | | |
| Additive | Kaolinite (Proportion of kaolinite in the additive) | - | - | 0.8 (80%) | 1.6 (80%) |
| | First carbonyl compound (EC) (Proportion of first carbonyl compound in the additive) | - | - | 0.2 (20%) | 0.4 (20%) |
| | pH buffer (EC+MEA) (Weight ratio of pH buffer over the first carbonyl compound) | - | - | 100 ppm | 100 ppm |

(Note: If no unit is specifically marked, each unit in the above TABLE is “parts by weight”.)

TABLE 17: Part-by-weight proportions of components in cement-based compositions of Recipe 19, Recipe 20, and Recipe 22 to Recipe 24

| Components \ No. of Recipe | | 19 | 20 | 22 | 23 | 24 |
|---|---|---|---|---|---|---|
| Cement-based cementitious material | Portland cement | 100.0 | 0.0 | 0.0 | 0.0 | 0.0 |
| | Slag | 0.0 | 100.0 | 98.0 | 95.0 | 90.0 |
| | Additive | 0.0 | 0.0 | 2.0 | 2.0 | 2.0 |
| Water | | 48 | | | | |
| Aggregates | | 275 | | | | |
| Weight ratio of water over cement-based cementitious material (W/C) | | 0.48 | | | 0.49 | 0.52 |
| Weight ratio of aggregates over cement-based cementitious material (A/C) | | 2.75 | | | 2.84 | 2.99 |
| Additive | Kaolinite (Proportion of kaolinite in the additive) | - | - | 1.6 (80%) | 1.6 (80%) | 1.6 (80%) |
| | First carbonyl compound (EC) (Proportion of first carbonyl compound in the additive) | - | - | 0.4 (20%) | 0.4 (20%) | 0.4 (20%) |
| | pH buffer (EC+MEA) (Weight ratio of pH buffer over the first carbonyl compound) | - | - | 100 ppm | 100 ppm | 100 ppm |

(Note: If no unit is specifically marked, each unit in the above TABLE is “parts by weight”.)

TABLE 18: Part-by-weight proportions of components in cement-based compositions of Recipe 25, Recipe 20, and Recipe 26 to Recipe 28

| Components \ No. of Recipe | | 25 | 20 | 26 | 27 | 28 |
|---|---|---|---|---|---|---|
| Cement-based cementitious material | Portland cement | 100.0 | 0.0 | 0.0 | 0.0 | 0.0 |
| | Slag | 0.0 | 100.0 | 95.0 | 92.0 | 90.0 |
| | Additive | 0.0 | 0.0 | 1.0 | 1.0 | 1.0 |
| Water | | 48 | | | | |
| Aggregates | | 275 | | | | |
| Weight ratio of water over cement-based cementitious material (W/C) | | | 0.48 | 0.50 | 0.52 | 0.53 |
| Weight ratio of aggregates over cement-based cementitious material (A/C) | | | 2.75 | 2.86 | 2.96 | 3.02 |
| Additive | Kaolinite (Proportion of kaolinite in the additive) | - | - | 0.8 (80%) | 0.8 (80%) | 0.8 (80%) |
| | First carbonyl compound (EC) (Proportion of first carbonyl compound in the additive) | - | - | 0.2 (20%) | 0.2 (20%) | 0.2 (20%) |
| | pH buffer (EC+MEA) (Weight ratio of pH buffer over the first carbonyl compound) | - | - | 100 ppm | 100 ppm | 100 ppm |

(Note: If no unit is specifically marked, each unit in the above TABLE is “parts by weight”.)

TABLE 19: Part-by-weight proportions of components in cement-based compositions of Recipe 1, Recipe 23, Recipe 29, and Recipe 30

| Components \ No. of Recipe | | 1 | 23 | 29 | 30 |
|---|---|---|---|---|---|
| Cement-based cementitious material | Portland cement | 100.0 | 50.0 | 50.0 | 50.0 |
| | Slag | 0.0 | 50.0 | 49.5 | 48.5 |
| | Additive | 0.0 | 0.0 | 0.5 | 1.5 |
| Water | | 48 | | | |
| Aggregates | | 275 | | | |
| Weight ratio of water over cement-based cementitious material (W/C) | | 0.48 | | | |
| Weight ratio of aggregates over cement-based cementitious material (A/C) | | 2.75 | | | |
| Additive | Kaolinite (Proportion of kaolinite in the additive) | - | - | 0.4 (80%) | 1.2 (80%) |
| | First carbonyl compound (EC) (Proportion of first carbonyl compound in the additive) | - | - | 0.1 (20%) | 0.3 (20%) |
| | pH buffer (EC+MEA) (Weight ratio of pH buffer over the first carbonyl compound) | - | - | 100 ppm | 100 ppm |

(Note: If no unit is specifically marked, each unit in the above TABLE is “parts by weight”.)

It can be seen from Recipe 1 to Recipe 30 as shown in the above TABLE 10 to TABLE 19 that only a part of Recipes of the cement-based compositions and the corresponding experimental results thereof are exemplarily described herein. However, it is not intended to limit the instant disclosure solely to the range of the above Recipe 1 to Recipe 30. Instead, a person of ordinary skill in the art should understand that he or she can adjust the above Recipes and the relative proportions of each component thereof according to various demands and all can still achieve corresponding or comparable experimental results.

**1.3 Mixing and Preparation of Cement-Based Composition**

According to the cement-based composition proportions of the above Recipe 1 to Recipe 30, components were mixed and prepared by following the method to obtain the cement-based compositions corresponding to Recipe 1 to Recipe 30:

(1) Weigh each component according to the weight proportions of the above Recipe 1 to Recipe 30.

(2) Pour aggregates (including fine aggregates and coarse aggregates), the first carbonyl compound, and a preformed pH buffer into a mixing container; and if there was no need to add the first carbonyl compound and the pH buffer, only the aggregates was poured into the mixing container in this step instead.

(3) Add the cement and/or the slag into the mixing container, which was then dry mixed thoroughly to achieve uniformity.

(4) If adding the water reducing agent is needed, stir the water reducing agent thoroughly with water to achieve uniformity in this step, then pour the obtained mixture into the mixing container, and mix for 30 seconds.

(5) After the mixing, pour the mixtures into the specimen mold (which may be a compression specimen mold has dimensions of 150*150*150 mm (in accordance with GB or DIN testing standards) or a cylindrical specimen mold has dimensions of Φ150*300 mm (in accordance with CNS or ASTM testing standards)).

(6) Assign each specimen by the corresponding number of Recipes, then transfer the specimens to a standard curing room (temperature at 23 ±1.7 °C and relative humidity above 97%) for standard curing in accordance with the requirements of CNS 1231 [Method for making and curing concrete test specimens in field] (corresponding to ASTM C31).

(7) After 24 hours, demold the specimens and place the specimens in the standard curing room for curing, where the specimens were cured until the corresponding period (i.e., approximately 3 days, 7 days, and 28 days from the beginning of mixing with added water) of each specimen was met.

**Example 2: Carbon Dioxide Sequestration by Cement-Based Compositions**

Taking Recipe 4 shown in the above TABLE 10 as an example, the cement-based cementitious material of the corresponding cement-based composition was formed by 98.0 wt% Portland cement and 2.0 wt% additive; that is, in Recipe 4, 2.0 wt% of the original Portland cement was replaced with 2.0 wt% of the additive. In some embodiments, the cement-based cementitious material of the corresponding cement-based composition was formed by 95.0 wt% Portland cement and 5.0 wt% of the additive; that is, in some embodiments, 5.0 wt% of the Portland cement was replaced with 5.0 wt% of the additive. Therefore, compared with a cement-based cementitious material formed by 100 wt% Portland cement, in certain embodiments (e.g., Recipe 4), for the preparation of every 360 kg of the cement-based cementitious material (which may contain at least the Portland cement and the additive or may further contain slag and/or fly ash), 7.2 kg (=360 kg*2.0 wt%) to 18 kg (=360 kg*5.0 wt%) of the cement-based cementitious materials could be saved. According to common knowledge in the art that emission of approximately 0.88 kg of carbon dioxide for preparing every cubic meter ($m^3$) of the cement-based cementitious material (which may contain at least the Portland cement or may further contain slag and/or fly ash), saving 7.2-18 kg of the cement-based cementitious materials in some embodiments was thus equivalent to saving the emission of 6.3-15.84 kg of carbon dioxide.

In addition, since using every 1 kg of the additive would sequester approximately 0.1 kg of carbon dioxide, replacing 7.2-18 kg of the original Portland cement with an equivalent amount (i.e., 7.2-18 kg) of the additive would thus sequester approximately 0.72-1.8 kg of carbon dioxide. Therefore, replacing 2.0-5.0 wt% of the original Portland cement with an equivalent amount (i.e., 2.0-5.0 wt%) of the additive would reduce approximately 7.02 kg (=6.3+0.72) to 17.64 kg (=15.84+1.8) of carbon dioxide emissions. In other words, the preparation of every 360 kg of the cement-based cementitious material (or 1 $m^3$ of the cement-based composition) according to some embodiments would save carbon dioxide emissions by approximately 2 wt% (=7.02/360) to 4.9 wt% (=17.64/360).

Accordingly, in some embodiments, the cement-based composition containing the additive can be used for carbon reduction, carbon sequestration, and/or carbon fixation. For example, the preparation of every 360 kg of the cement-based cementitious material (or 1 $m^3$ of the cement-based composition) according to some embodiments would save carbon dioxide emissions by approximately 2-4.9 wt%. Hence, in some embodiments, the cement-based compositions containing the additive can be further used to achieve carbon capture and storage (CCS), reduction of greenhouse gas emissions, and minimization of product carbon footprint (PCF) in ESG sustainability development.

**Example 3: Compressive Strength of Cement-Based Composition**

The compressive strength tests were carried out in accordance with the test method specified in CNS 1232 [Compressive strength test method for concrete cylindrical specimens] (corresponding to ASTM C39) to obtain the early

(i.e., approximately 3 days and 7 days from the beginning of mixing with the added water) compressive strength and the late (i.e., approximately 28 days from the beginning of mixing with the added water) compressive strength. Specifically, details of the compressive strength tests used in the following Examples can be referred to as below.

(1) Take out the cement-based composition specimens of each Recipe from the curing room, place the specimens in a shaded area, and then undergo the tests.

(2) Clean the bottom of the cement-based composition specimens of each Recipe.

(3) Add water to gypsum and stir uniformly, then pour the obtain mixture onto the top of the cement-based composition specimens of each Recipe, then cover the cement-based composition specimens with a glass piece, and place a bubble level to keep the top of the cement-based composition specimen of each Recipe horizontal.

(4) Cover the concrete cylindrical specimen flatly according to CNS 11297 (corresponding to ASTM C617), and then remove the glass piece.

(5) Place the axis of the cylindrical specimen at the center of the pressure-bearing axis of the universal testing machine (UTM), maintain the pressurization rate at 150 kg/sec, and undergo the test until the cement-based composition specimens of each Recipe are destroyed.

(6) Record the maximum load withstood by the cement-based composition specimens of each Recipe, and divide the maximum load by the compressive area to obtain the compressive strength of the cement-based composition specimens of each Recipe.

It should be noted that the obtained test results of the following "Example 3A" to "Example 3L" were all the cement-based compositions prepared by the manufacturing method of the aforementioned "1.3 Mixing and Preparation of Cement-Based Composition," and the compressive strength tests of the cement-based compositions were carried out using the testing steps of the aforementioned Example 3, which has already been described in detail herein and thus will not be repeatedly described in detail later.

In addition, test results of the compressive strength tests corresponding to the following "Example 3A" to "Example 3L" are listed in the following TABLE 20 to TABLE 29, respectively. As mentioned above, the term "design compressive strength" (also referred to as "design strength") used herein refers to the design strength of structural members made of structural cement-based compositions that is sufficient to withstand the design load obtained by the strength design method, and the detailed definition of the term "design compressive strength" can be referred to Chapter 2 (Analysis and Design) of Code for Design of Concrete Structures published by NLMA, MOI, R.O.C., which will not be repeatedly described later.

**Example 3A: Compressive Strength of Cement-Based Composition-Adding Ratio of Additive (A/C=2.75)**

Please refer to TABLE 10 and FIG. 1. FIG. 1 shows the test results of the early and late compressive strengths of the cement-based compositions of Recipe 1 to Recipe 4 shown in TABLE 10, and the corresponding data thereof can be referred to the following TABLE 20.

TABLE 20: Test results of the early (the 3-day and 7-day) and late (the 28-day) compressive strengths of the cement-based compositions of Recipe 1 to Recipe 4 (design compressive strength: 280 $kgf/cm^2$)

| Components \ No. of Recipe | | 1 (Control group) | 2 | 3 | 4 |
|---|---|---|---|---|---|
| Cement-based cementitious material | Portland cement | 100.0 | 99.5 | 99.0 | 98.0 |
| | Additive | 0.0 | 0.5 | 1.0 | 2.0 |
| Weight ratio of aggregates over cement-based cementitious material (A/C) | | 2.75 | | | |
| Compressive strength | 3 days ($kgf/cm^2$) | 289 | 300 | 303 | 304 |
| | 7 days ($kgf/cm^2$) | 396 | 413 | 418 | 421 |
| | 28 days ($kgf/cm^2$) | 481 | 504 | 513 | 515 |
| Compressive strength **increase or decrease percentage** | **3 days (%)** | **-** | **3.8** | **4.8** | **5.2** |
| | **7 days (%)** | **-** | **4.3** | **5.6** | **6.3** |
| | **28 days (%)** | **-** | **4.8** | **6.7** | **7.1** |

It can be seen from TABLE 20 and FIG. 1 that in the early (the 3-day and 7-day) and late (the 28-day) compressive strength tests, compared with the design compressive strength (i.e., 280 $kgf/cm^2$), the 3-day, 7-day, and 28-day compressive strengths of the cement-based compositions containing the additives were approximately 300-304 $kgf/cm^2$, 413-421 $kgf/cm^2$, and 504-515 $kgf/cm^2$, respectively, which were all much greater than the design compressive strength. Moreover, compared with those of Recipe 1 (without the addition of the additive) as the control group, the 3-day, 7-day, and 28-day compressive strengths of the cement-based compositions containing the additive were increased by 3.8-5.2%, 4.3-6.3%, and 4.8-7.1%, respectively. Accordingly, in some embodiments, compared with those of the cement-based composition without the addition of the additive, the 3-day, 7-day, and 28-day compressive strengths (i.e., the early and late compressive strengths) of the cement-based compositions containing the additives could be effectively increased.

**Example 3B: Compressive Strength of Cement-Based Composition-Adding Ratio of Additive (A/C=1.00; W/C=0.48)**

Please refer to TABLE 11 and FIG. 2. FIG. 2 shows the test results of the early and late compressive strengths of the cement-based compositions of Recipe 5 to Recipe 8 shown in TABLE 11, and the corresponding data thereof can be referred to the following TABLE 21.

TABLE 21: Test results of the early (the 3-day and 7-day) and late (the 28-day) compressive strengths of the cement-based compositions of Recipe 5 to Recipe 8 (design compressive strength: 280 kgf/cm$^2$)

| Components \ No. of Recipe | | 5 (Control group) | 6 | 7 | 8 |
|---|---|---|---|---|---|
| Cement-based cementitious material | Portland cement | 100.0 | 99.5 | 99.0 | 98.0 |
| | Additive | 0.0 | 0.5 | 1.0 | 2.0 |
| Weight ratio of water over cement-based cementitious material (W/C) | | 0.48 | | | |
| Weight ratio of aggregates over cement-based cementitious material (A/C) | | 1.00 | | | |
| Compressive strength | 3 days (kgf/cm$^2$) | 315 | 324 | 328 | 330 |
| | 7 days (kgf/cm$^2$) | 436 | 453 | 458 | 462 |
| | 28 days (kgf/cm$^2$) | 534 | 558 | 567 | 571 |
| Compressive strength **increase or decrease percentage** | **3 days (%)** | **-** | **2.9** | **4.1** | **4.8** |
| | **7 days (%)** | **-** | **3.9** | **5.0** | **6.0** |
| | **28 days (%)** | **-** | **4.5** | **6.2** | **6.9** |

It can be seen from TABLE 21 and FIG. 2 that in the early (the 3-day and 7-day) and late (the 28-day) compressive strength tests, compared with the design compressive strength (i.e., 280 kgf/cm$^2$), the 3-day, 7-day, and 28-day compressive strengths of the cement-based compositions containing the additives were approximately 324-330 kgf/cm$^2$, 453-462 kgf/cm$^2$, and 558-571 kgf/cm$^2$, respectively, which were all much greater than the design compressive strength. Moreover, compared with those of Recipe 5 (without the addition of the additive) as the control group, the 3-day, 7-day, and 28-day compressive strengths of the cement-based compositions containing the additive were increased by 2.9-4.8%, 3.9-6.0%, and 4.5-6.9%, respectively. Accordingly, in some embodiments, compared with those of the cement-based composition without the addition of the additive, the 3-day, 7-day, and 28-day compressive strengths (i.e., the early and late compressive strengths) of the cement-based compositions containing the additives could be effectively increased.

**Example 3C: Compressive Strength of Cement-Based Composition-Weight Ratio of Aggregates over Cement-Based Cementitious Material (A/C)**

Please refer to TABLE 20, TABLE 21, and FIG. 3A to FIG. 3C. FIG. 3A to FIG. 3C respectively show the test results of the 3-day, 7-day, and 28-day compressive strengths of the cement-based compositions of Recipe 1 to Recipe 4 and Recipe 5 to Recipe 8, and the corresponding data thereof can be referred to the above TABLE 20 and TABLE 21.

It can be seen from FIG. 3A to FIG. 3C, no matter for the early period (the 3-day and 7-day) or the late period (the 28-day), the compressive strengths of the higher A/C (e.g., A/C=2.75 of Recipe 1 to Recipe 4) would be less than those of the lower A/C (e.g., A/C=1.00 of Recipe 5 to Recipe 8). The higher the A/C, the more the aggregates containing in the cement-based composition, and the less the cement-based cementitious material containing in the cement-based composition. Therefore, the total amount of the cement-based cementitious material that can actually undergo the

hydration can be affected, resulting in a slight increase in the compressive strength of the cement-based compositions with the relatively higher A/C. Furthermore, regardless of whichever the A/C of the cement-based composition is relatively high or low, in some embodiments, compared with those of the cement-based composition without the addition of the additive, the 3-day, 7-day, and 28-day compressive strengths (i.e., the early and late compressive strengths) of the cement-based compositions containing the additives could be effectively increased.

**Example 3D: Compressive Strength of Cement-Based Composition-Adding Ratio of Additive (A/C=1.00; W/C=0.27)**

Please refer to TABLE 12 and FIG. 4. FIG. 4 shows the test results of the early and late compressive strengths of the cement-based compositions of Recipe 9 to Recipe 11 shown in TABLE 12, and the corresponding data thereof can be referred to the following TABLE 22.

TABLE 22: Test results of the early (the 3-day and 7-day) and late (the 28-day) compressive strengths of the cement-based compositions of Recipe 9 to Recipe 11 (design compressive strength: 280 kgf/cm$^2$)

| Components \ No. of Recipe | | 9 (Control group) | 10 | 11 |
|---|---|---|---|---|
| Cement-based cementitious material | Portland cement | 100.0 | 99.5 | 99.0 |
| | Additive | 0.0 | 0.5 | 1.0 |
| Water reducing agent | | 0.8 | | |
| Weight ratio of water over cement-based cementitious material (W/C) | | 0.27 | | |
| Weight ratio of aggregates over cement-based cementitious material (A/C) | | 1.00 | | |
| Compressive strength | 3 days (kgf/cm$^2$) | 590 | 610 | 621 |
| | 7 days (kgf/cm$^2$) | 823 | 846 | 848 |
| | 28 days (kgf/cm$^2$) | 1,015 | 1,043 | 1,045 |
| Compressive strength **increase or decrease percentage** | **3 days (%)** | **-** | **3.4** | **5.3** |
| | **7 days (%)** | **-** | **2.8** | **3.0** |
| | **28 days (%)** | **-** | **2.8** | **3.0** |

It can be seen from TABLE 22 and FIG. 4 that in the early (the 3-day and 7-day) and late (the 28-day) compressive strength tests, compared with the design compressive strength (i.e., 280 kgf/cm$^2$), the 3-day, 7-day, and 28-day compressive strengths of the cement-based compositions containing the additives were approximately 610-621 kgf/cm$^2$, 846-848 kgf/cm$^2$, and 1,043-1,045 kgf/cm$^2$, respectively, which were all much greater than the design compressive strength. Moreover, compared with those of Recipe 9 (without the addition of the additive) as the control group, the 3-day, 7-day, and 28-day compressive strengths of the cement-based compositions containing the additives were increased by 3.4-5.3%, 2.8-3.0%, and 2.8-3.0%, respectively. Accordingly, in some embodiments, compared with those of the cement-based composition without the addition of the additive, the 3-day, 7-day, and 28-day compressive strengths (i.e., the early

and late compressive strengths) of the cement-based compositions containing the additives could be effectively increased.

Furthermore, it can also be seen from TABLE 22 and FIG. 4 that even though the cement-based compositions according to some embodiments contain the water reducing agent, the 3-day, 7-day, and 28-day compressive strengths (i.e., the early and late compressive strengths) of the cement-based compositions containing the additives could still be effectively increased and would not be affected by the addition of the water reducing agent.

**Example 3E: Compressive Strength of Cement-Based Composition-Weight Ratio of Water over Cement-Based Cementitious Material (W/C)**

Please refer to TABLE 21, TABLE 22, and FIG. 5A to FIG. 5C. FIG. 5A to FIG. 5C respectively show the test results of the 3-day, 7-day, and 28-day compressive strengths of the cement-based compositions of Recipe 5 to Recipe 7 and Recipe 9 to Recipe 11, and the corresponding data thereof can be referred to the above TABLE 21 and TABLE 22.

It can be seen from FIG. 5A to FIG. 5C, for those of either the early period (the 3-day and 7-day) or the late period (the 28-day), the compressive strengths of the higher W/C (e.g., W/C=0.48 of Recipe 5 to Recipe 7) would be less than those of the lower W/C (e.g., W/C=0.27 of Recipe 9 to Recipe 11). The higher the W/C, the more the water containing in the cement-based composition, and the less the cement-based cementitious material containing in the cement-based composition. Therefore, the total amount of the cement-based cementitious material that can actually undergo the hydration can be affected, resulting in a slight increase in the compressive strength of the cement-based compositions with the relatively higher W/C. Furthermore, regardless of whichever the W/C of the cement-based composition is relatively high or low, in some embodiments, compared with those of the cement-based compositions without the addition of the additive, the 3-day, 7-day, and 28-day compressive strengths (i.e., the early and late compressive strengths) of the cement-based compositions containing the additives could be effectively increased.

**Example 3F: Compressive Strength of Cement-Based Composition-Adding Ratio of Additive (W/C=0.60)**

Please refer to TABLE 13 and FIG. 6. FIG. 6 shows the test results of the early and late compressive strengths of the cement-based compositions of Recipe 12 to Recipe 14 shown in TABLE 13, and the corresponding data thereof can be referred to the following TABLE 23.

TABLE 23: Test results of the early (the 3-day and 7-day) and late (the 28-day) compressive strengths of the cement-based compositions of Recipe 12 to Recipe 14 (design compressive strength: 280 $kgf/cm^2$)

| Components \ No. of Recipe | | 12 (Control group) | 13 | 14 |
|---|---|---|---|---|
| Cement-based cementitious material | Portland cement | 100.0 | 99.5 | 99.0 |
| | Additive | 0.0 | 0.5 | 1.0 |
| Weight ratio of water over cement-based cementitious material (W/C) | | 0.60 | | |
| Weight ratio of aggregates over cement-based cementitious material (A/C) | | 1.83 | | |
| Compressive strength | 3 days ($kgf/cm^2$) | 270 | 289 | 297 |
| | 7 days ($kgf/cm^2$) | 390 | 413 | 425 |
| | 28 days ($kgf/cm^2$) | 408 | 428 | 440 |
| Compressive strength **increase or decrease percentage** | **3 days (%)** | **-** | **7.0** | **10.0** |
| | **7 days (%)** | **-** | **5.9** | **9.0** |
| | **28 days (%)** | **-** | **4.9** | **7.8** |

It can be seen from TABLE 23 and FIG. 6 that in the early (the 3-day and 7-day) and late (the 28-day) compressive strength tests, compared with the design compressive strength (i.e., 280 $kgf/cm^2$), the 3-day, 7-day, and 28-day compressive strengths of the cement-based compositions containing the additives were approximately 289-297 $kgf/cm^2$, 413-425 $kgf/cm^2$, and 428-440 $kgf/cm^2$, respectively, which were all much greater than the design compressive strength. Moreover, compared with those of Recipe 12 (without the addition of the additive) as the control group, the 3-day, 7-day, and 28-day compressive strengths of the cement-based compositions containing the additives were increased by 7.0-10.0%, 5.9-9.0%, and 4.9-7.8%, respectively. Accordingly, in some embodiments, compared with those of the cement-based composition without the addition of the additive, the 3-day, 7-day, and 28-day compressive strengths (i.e., the early and late compressive strengths) of the cement-based compositions containing the additives could be effectively increased.

Furthermore, it can also be seen from the test results of the early and late compressive strengths of Recipe 1 to Recipe 14, at least under the conditions that the W/C of the cement-based compositions containing the additive is 0.27-0.60, the 3-day, 7-day, and 28-day compressive strengths (i.e., the early and late compressive strengths) of the cement-based compositions containing the additives could be effectively increased. In addition, it can also be seen from the test results of the early and late compressive strengths of Recipe 1 to Recipe 14 that at least under the conditions that the A/C of the cement-based compositions containing the additive is 1.00-2.75, the 3-day, 7-day, and 28-day compressive strengths (i.e., the early and late compressive strengths) of the cement-based compositions containing the additives could be effectively increased.

**Example 3G: Compressive Strength of Cement-Based Composition-Weight Ratio of Kaolinite over First Carbonyl Compound**

Please refer to TABLE 14 and FIG. 7. FIG. 7 shows the test results of the early and late compressive strengths of

the cement-based compositions of Recipe 1, Recipe 16, Recipe 4, and Recipe 15 shown in TABLE 14, and the corresponding data thereof can be referred to the following TABLE 24.

TABLE 24: Test results of the early (the 3-day and 7-day) and late (the 28-day) compressive strengths of the cement-based compositions of Recipe 1, Recipe 16, Recipe 4, and Recipe 15 (design compressive strength: 280 kgf/$cm^2$)

| **Components** \ **No. of Recipe** | | **1 (Control group)** | **16** | **4** | **15** |
|---|---|---|---|---|---|
| Cement-based cementitious material | Portland cement | 100.0 | 98.0 | 98.0 | 98.0 |
| | Additive | 0.0 | 2.0 | 2.0 | 2.0 |
| Additive | Kaolinite | 80% | 70% | 80% | 90% |
| | First carbonyl compound (EC) | 20% | 30% | 20% | 10% |
| | pH buffer (EC+MEA) | 100 ppm | 100 ppm | 100 ppm | 100 ppm |
| Compressive strength | 3 days (kgf/$cm^2$) | 289 | 317 | 304 | 298 |
| | 7 days (kgf/$cm^2$) | 396 | 442 | 421 | 406 |
| | 28 days (kgf/$cm^2$) | 481 | 552 | 515 | 499 |
| Compressive strength **increase or decrease percentage** | **3 days (%)** | - | **9.7** | **5.2** | **3.1** |
| | **7 days (%)** | - | **11.6** | **6.3** | **2.5** |
| | **28 days (%)** | - | **14.8** | **7.1** | **3.7** |

It can be seen from TABLE 24 and FIG. 7 that in the early (the 3-day and 7-day) and late (the 28-day) compressive strength tests, compared with the design compressive strength (i.e., 280 kgf/$cm^2$), the 3-day, 7-day, and 28-day compressive strengths of the cement-based compositions containing the additives were approximately 298-317 kgf/$cm^2$, 406-442 kgf/$cm^2$, and 499-552 kgf/$cm^2$, respectively, which were all much greater than the design compressive strength. Moreover, compared with those of Recipe 1 (without the addition of the additive) as the control group, the 3-day, 7-day, and 28-day compressive strengths of the cement-based compositions containing the additives of Recipe 4 (identical to Recipe 1 with the weight ratio of kaolinite over the first carbonyl compound also being 8:2) were increased by 5.2%, 6.3%, and 7.1%, respectively. Accordingly, the 3-day, 7-day, and 28-day compressive strengths of the cement-based composition containing the additives of Recipe 4 could be apparently increased.

Furthermore, it can also be seen from FIG. 7 that compared with those of the cement-based compositions containing the additives of Recipe 4 (with the weight ratio of kaolinite over the first carbonyl compound being 8:2), the 3-day, 7-day, and 28-day compressive strength of Recipe 16 (with the weight ratio of kaolinite over the first carbonyl compound being 7:3) and Recipe 15 (with the weight ratio of kaolinite over the first carbonyl compound being 9:1) were comparable to those of Recipe 4, and all were greater than the design compressive strength. In other words, in some embodiments, compared with those of the cement-based compositions without the addition of the additive, at least in the case of the weight ratios of kaolinite over the first carbonyl compound being 7:3 to 9:1 (i.e., the weight ratio of 2.33 to 9.00),

the 3-day, 7-day, and 28-day compressive strengths (i.e., the early and late compressive strengths) of the cement-based compositions containing the additives could be effectively increased.

**Example 3H: Compressive Strength of Cement-Based Composition-Weight Ratio of Kaolinite over First Carbonyl Compound**

Please refer to TABLE 15 and FIG. 8. FIG. 8 shows the test results of the early and late compressive strengths of the cement-based compositions of Recipe 1, Recipe 4, Recipe 17, and Recipe 18 shown in TABLE 15, and the corresponding data thereof can be referred to the following TABLE 25.

TABLE 25: Test results of the early (the 3-day and 7-day) and late (the 28-day) compressive strengths of the cement-based compositions of Recipe 1, Recipe 4, Recipe 17, and Recipe 18 (design compressive strength: 280 kgf/$cm^2$)

| Components | No. of Recipe | 1 (Control group) | 4 | 17 | 18 |
|---|---|---|---|---|---|
| Cement-based cementitious material | Portland cement | 100.0 | 98.0 | 98.0 | 98.0 |
| | Additive | 0.0 | 2.0 | 2.0 | 2.0 |
| Additive | Kaolinite | 80% | 80% | 80% | 80% |
| | First carbonyl compound (EC) | 20% | 20% | 20% | 20% |
| | pH buffer (EC+MEA) | 100 ppm | 100 ppm | 10,000 ppm | 20,000 ppm |
| Compressive strength | 3 days (kgf/$cm^2$) | 289 | 304 | 299 | 314 |
| | 7 days (kgf/$cm^2$) | 396 | 421 | 425 | 417 |
| | 28 days (kgf/$cm^2$) | 481 | 515 | 508 | 522 |
| Compressive strength **increase or decrease percentage** | **3 days (%)** | **-** | **5.2** | **3.5** | **8.7** |
| | **7 days (%)** | **-** | **6.3** | **7.3** | **5.3** |
| | **28 days (%)** | **-** | **7.1** | **5.6** | **8.5** |

It can be seen from TABLE 25 and FIG. 8 that in the early (the 3-day and 7-day) and late (the 28-day) compressive strength tests, compared with the design compressive strength (i.e., 280 kgf/$cm^2$), the 3-day, 7-day, and 28-day compressive strengths of the cement-based compositions containing the additives were approximately 299-314 kgf/$cm^2$, 417-425 kgf/$cm^2$, and 508-522 kgf/$cm^2$, respectively, which were all much greater than the design compressive strength. Moreover, compared with those of Recipe 1 (without the addition of the additive) as the control group, the 3-day, 7-day, and 28-day compressive strengths of the cement-based compositions containing the additives of Recipe 4 (with the weight ratio of the Portland cement over the additive being 98:2) were increased by 5.2%, 6.3%, and 7.1%, respectively. Accordingly, the 3-day, 7-day, and 28-day compressive strengths of the cement-based composition containing the additives of Recipe 4 could be apparently increased.

Furthermore, it can also be seen from FIG. 8 that compared with those of the cement-based compositions containing the additives of Recipe 4 (with the content of the pH buffer being 100 ppm), the 3-day, 7-day, and 28-day

compressive strengths of Recipe 17 (with the content of the pH buffer being 10,000 ppm) and Recipe 18 (with the content of the pH buffer being 20,000 ppm) were comparable to those of Recipe 4, and all were greater than the design compressive strength. In other words, in some embodiments, compared with those of the cement-based compositions without the addition of the additive, at least in the case of the contents of the pH buffer over the first carbonyl compound being 100-20,000 ppm, the 3-day, 7-day, and 28-day compressive strengths (i.e., the early and late compressive strengths) of the cement-based compositions containing the additives could be effectively increased.

**Example 3I: Compressive Strength of Cement-Based Composition-Additive Added to Green Cement (Replacing an Equivalent Amount of Green Cement with Additive)**

Please refer to TABLE 16 and FIG. 9. FIG. 9 shows the test results of the early and late compressive strengths of the cement-based compositions of Recipe 19 to Recipe 22 shown in TABLE 16, and the corresponding data thereof can be referred to the following TABLE 26.

TABLE 26: Test results of the early (the 3-day and 7-day) and late (the 28-day) compressive strengths of the cement-based compositions of Recipe 19 to Recipe 22 (design compressive strength: 280 $kgf/cm^2$)

| Components | No. of Recipe | 19 (Control group) | 20 | 21 | 22 |
|---|---|---|---|---|---|
| Cement-based cementitious material | Portland cement | 100.0 | 0.0 | 0.0 | 0.0 |
| | Limestone cement | 0.0 | 100.0 | 99.0 | 98.0 |
| | Additive | 0.0 | 0.0 | 1.0 | 2.0 |
| Compressive strength | 3 days ($kgf/cm^2$) | 196 | 253 | 356 | 367 |
| | 7 days ($kgf/cm^2$) | 348 | 469 | 488 | 492 |
| | 28 days ($kgf/cm^2$) | 466 | 519 | 604 | 573 |
| Compressive strength **increase or decrease percentage** | **3 days (%)** | **-** | **29.1** | **81.6** | **87.2** |
| | **7 days (%)** | **-** | **34.8** | **40.2** | **41.4** |
| | **28 days (%)** | **-** | **11.4** | **29.6** | **23.0** |

It can be seen from TABLE 26 and FIG. 9 that in the early (the 3-day and 7-day) and late (the 28-day) compressive strength tests, compared with the design compressive strength (i.e., 280 $kgf/cm^2$), regardless of whether the Portland cement (corresponding to Recipe 19) or the limestone cement (representing "green cement" and corresponding to Recipe 20) was used as the cement, in the case of the cement-based composition without the addition of the additive, the 3-day compressive strengths thereof were approximately 196 $kgf/cm^2$ and 253 $kgf/cm^2$, respectively, which were all less than the design compressive strength.

However, with the addition of the additives (corresponding to Recipe 21 and Recipe 22), compared with the design compressive strength (i.e., 280 $kgf/cm^2$), even though the limestone cement was used as the cement, the 3-day, 7-day, and 28-day compressive strengths of the cement-based compositions containing the additive could still be increased by approximately 81.6-87.2%, 40.2-41.4%, and 11.4-23.0%, respectively. Accordingly, in some embodiments, the results of the cement-based compositions using the limestone cement as the cement were compared with the results of the cement-based compositions using Portland cement as the cement and without the addition of the additive. From the comparison, even though the limestone cement was used as the cement, since the cement-based compositions contain the additives, the 3-day, 7-day, and 28-day compressive strengths (i.e., the early and late compressive strengths) of the cement-based compositions could also be effectively increased.

Moreover, further taking Recipe 20 as another control group, compared with those of Recipe 20 as the control group (where the limestone cement was used as the cement and without the addition of the additive), the 3-day, 7-day, and 28-day compressive strengths of the cement-based compositions containing the additives could be further increased by approximately 40.7-45.1%, 4.1-4.9%, and 10.4-16.4%, respectively. Accordingly, in some embodiments, the results of the cement-based compositions using the limestone cement as the cement were compared with the results of the cement-based compositions using Portland cement as the cement and without the addition of the additive. From the comparison, even though the limestone cement was used as the cement, since the cement-based compositions contain the additives, the 3-day, 7-day, and 28-day compressive strengths (i.e., the early and late compressive strengths) of the cement-based compositions could also be effectively increased, regardless of whether Portland cement, limestone cement, or both was used as the cement.

**Example 3J: Compressive Strength of Cement-Based Composition-Additive Added to Green Cement (Adding 2 wt% Additive to a Reduced Amount of Green Cement)**

Please refer to TABLE 17 and FIG. 10. FIG. 10 shows the test results of the early and late compressive strengths of the cement-based compositions of Recipe 19, Recipe 20, and Recipe 22 to Recipe 24 shown in TABLE 17, and the corresponding data thereof can be referred to the following TABLE 27.

TABLE 27: Test results of the early (the 3-day and 7-day) and late (the 28-day) compressive strengths of the cement-based compositions of Recipe 19, Recipe 20, and Recipe 22 to Recipe 24 (design compressive strength: 280 kgf/cm$^2$)

| Components | No. of Recipe | 19 (Control group I) | 20 (Control group II) | 22 | 23 | 24 |
|---|---|---|---|---|---|---|
| Cement-based cementitious material | Portland cement | 100.0 | 0.0 | 0.0 | 0.0 | 0.0 |
| | Limestone cement | 0.0 | 100.0 | 98.0 | 95.0 | 90.0 |
| | Additive | 0.0 | 0.0 | 2.0 | 2.0 | 2.0 |
| Compressive strength | 3 days (kgf/cm$^2$) | 196 | 253 | 367 | 335 | 307 |
| | 7 days (kgf/cm$^2$) | 348 | 469 | 492 | 442 | 430 |
| | 28 days (kgf/cm$^2$) | 466 | 519 | 573 | 552 | 504 |
| Compressive strength **increase or decrease percentage** | **3 days (%)** | **-** | **29.1** | **87.2** | **70.9** | **56.6** |
| | **7 days (%)** | **-** | **34.8** | **41.4** | **27.0** | **23.6** |
| | **28 days (%)** | **-** | **11.4** | **23.0** | **18.5** | **8.2** |

It can be seen from TABLE 27 and FIG. 10 that in the early (the 3-day and 7-day) and late (the 28-day) compressive strength tests, compared with the design compressive strength (i.e., 280 kgf/cm$^2$), regardless of whether the Portland cement (corresponding to Recipe 19) or the limestone cement (representing the "green cement" and corresponding to Recipe 20) was used as the cement, in the case of the cement-based composition without the addition of the additives, the 3-day compressive strengths were approximately 196 kgf/cm$^2$ and 253 kgf/cm$^2$, respectively, which were all less than the design compressive strength.

However, when the cement-based cementitious material contains, for example, 2 wt% of the additive (corresponding to Recipe 22 to Recipe 24), the 3-day compressive strengths thereof were approximately 367 kgf/cm$^2$, 335 kgf/cm$^2$, and 307 kgf/cm$^2$, respectively, which were all apparently greater than the design compressive strength (i.e., 280 kgf/cm$^2$). Accordingly, in some embodiments, even though the content of the limestone cement in the cement-based

cementitious material was reduced from 100 parts by weight (i.e., Recipe 20) to 98 parts by weight (i.e., reduced to 98 wt%), because the cement-based cementitious material contains, for example, 2 wt% of the additive (corresponding to Recipe 22) resulting in the total amount of the cement-based compositions being100 parts by weight (i.e., 100 wt%), the 3-day compressive strength (i.e., the early compressive strength) of the cement-based composition (with the addition of the additive and a reduced amount of the limestone cement) was still apparently greater than the design compressive strength. Similarly, in some other embodiments, even though the contents of the limestone cement in the cement-based cementitious material were respectively reduced from 100 parts by weight (i.e., Recipe 20) to 95 parts by weight (i.e., reduced to 95 wt%) and 90 parts by weight (i.e., reduced to 90 wt%), because the cement-based cementitious material contains, for example, 2 wt% of the additives (corresponding to Recipe 23 to Recipe 24) resulting in the total amounts of the cement-based compositions being respectively 97 parts by weight (i.e., reduced to 97 wt%) and 92 parts by weight (i.e., reduced to 92 wt%), the 3-day compressive strengths (i.e., the early compressive strengths) of the cement-based compositions (each with the addition of the additive and a reduced amount of the limestone cement) were still apparently greater than the design compressive strength.

Furthermore, compared with those of Recipe 19 as the control group (where the Portland cement was used as the cement and without the addition of the additive), even though the limestone cement was used as the cement, the 3-day, 7-day, and 28-day compressive strengths of the cement-based compositions containing, for example, 2 wt% of the additive could still be increased by approximately 56.6-87.2%, 23.6-41.4%, and 8.2-23.0%, respectively. Accordingly, in some embodiments, the results of the cement-based compositions using the limestone cement as the cement were compared with the results of the cement-based compositions using Portland cement as the cement and without the addition of the additive. From the comparison, even though the limestone cement was used as the cement, since the cement-based compositions contain, for example, 2 wt% of the additive, the 3-day, 7-day, and 28-day compressive strengths (i.e., the early and late compressive strengths) of the cement-based compositions could also be effectively increased.

Moreover, further taking Recipe 20 as another control group, compared with those of Recipe 20 as the control group (where the limestone cement was used as the cement and without the addition of the additive, representing the "green cement"), the 3-day compressive strengths of the cement-based compositions containing, for example, 2 wt% of the additive could be increased by approximately 21.3-45.1%, while the 7-day compressive strength thereof could be increased by approximately 4.9% (e.g., Recipe 22) and the 28-day compressive strengths thereof could be increased by approximately 6.4-10.4% (e.g., Recipe 22 and Recipe 23). Accordingly, in some embodiments, the results of the cement-based compositions using the limestone cement as the cement were compared with the results of the cement-based compositions using limestone cement as the cement and without the addition of the additive (i.e., the "green cement"). From the comparison, even though a reduced amount of limestone cement (i.e., 98 wt%, 95 wt%, and 90 wt%) was used as the cement, since the cement-based compositions contain, for example, 2 wt% of the additive so that the total sum of the cement-based compositions were respectively 100 wt%, 97 wt%, and 92 wt% (i.e., a reduced amount of the cement-based cementitious material), the 3-day, 7-day, and 28-day compressive strengths (i.e., the early and late compressive strengths) of the cement-based compositions could also be effectively increased.

**Example 3K: Compressive Strength of Cement-Based Composition-Additive Added to Green Cement (Adding 1 wt% Additive to a Reduced Amount of Green Cement)**

Please refer to TABLE 18 and FIG. 11. FIG. 11 shows the test results of the early and late compressive strengths of the cement-based compositions of Recipe 25, Recipe 20, and Recipe 26 to Recipe 28 shown in TABLE 18, and the corresponding data thereof can be referred to the following TABLE 28.

TABLE 28: Test results of the early (the 3-day and 7-day) and late (the 28-day) compressive strengths of the cement-based compositions of Recipe 25, Recipe 20, and Recipe 26 to Recipe 28 (design compressive strength: 280 kgf/cm$^2$)

| Components \ No. of Recipe | | 25 (Control group I) | 20 (Control group II) | 26 | 27 | 28 |
|---|---|---|---|---|---|---|
| Cement-based cementitious material | Portland cement | 100.0 | 0.0 | 0.0 | 0.0 | 0.0 |
| | Limestone cement | 0.0 | 100.0 | 95.0 | 92.0 | 90.0 |
| | Additive | 0.0 | 0.0 | 1.0 | 1.0 | 1.0 |
| Compressive strength | 3 days (kgf/cm$^2$) | 297 | 349 | 350 | 357 | 296 |
| | 7 days (kgf/cm$^2$) | 379 | 414 | 412 | 398 | 365 |
| | 28 days (kgf/cm$^2$) | 479 | 487 | 491 | 525 | 426 |
| Compressive strength **increase or decrease percentage** | **3 days (%)** | **-** | **17.5** | **17.8** | **20.2** | **-0.3** |
| | **7 days (%)** | **-** | **9.2** | **8.7** | **5.0** | **-3.7** |
| | **28 days (%)** | **-** | **1.7** | **2.5** | **9.6** | **-11.1** |

It can be seen from TABLE 28 and FIG. 11 that in the early (the 3-day and 7-day) and late (the 28-day) compressive strength tests, compared with the design compressive strength (i.e., 280 kgf/cm$^2$), when the cement-based cementitious material contains, for example, 1 wt% of the additive (corresponding to Recipe 26 to Recipe 28), the 3-day compressive strengths thereof were approximately 350 kgf/cm$^2$, 357 kgf/cm$^2$, and 296 kgf/cm$^2$, respectively, which were all apparently greater than the design compressive strength (i.e., 280 kgf/cm$^2$). Accordingly, in some embodiments, even though the content of the limestone cement in the cement-based cementitious material was reduced from 100 parts by weight (i.e., Recipe 20) to 95 parts by weight (i.e., reduced to 95 wt%), because the cement-based cementitious material contains, for example, 1 wt% of the additive (corresponding to Recipe 26) resulting in the total amount of the cement-based compositions was 96 parts by weight (i.e., 96 wt%), the 3-day compressive strength (i.e., the early compressive strength) of the cement-based composition (with the addition of the additives and a reduced amount of the limestone cement) was still apparently greater than the design compressive strength. Similarly, in some other embodiments, even though the contents of the limestone cement in the cement-based cementitious material were respectively reduced from 100 parts by weight (i.e., Recipe 20) to 92 parts by weight (i.e., reduced to 92 wt%) and 90 parts by weight (i.e., reduced to 90 wt%), because the cement-based cementitious material contains, for example, 1 wt% of the additives (corresponding to Recipe 27 to Recipe 28) resulting in the total amounts of the cement-based compositions being respectively 93 parts by weight (i.e., reduced to 93 wt%) and 91 parts by weight (i.e., reduced to 91 wt%), the 3-day compressive strengths (i.e., the early compressive strengths) of the cement-based compositions (each with the addition of the additive and a reduced amount of the limestone cement) were still apparently greater than the design compressive strength.

Furthermore, compared with those of Recipe 25 as the control group (where the Portland cement was used as the cement and without the addition of the additive), even though the limestone cement was used as the cement thereof, the 3-day, 7-day, and 28-day compressive strengths of the cement-based compositions containing, for example, 1 wt% of the additive could still be increased by approximately 17.8-20.2%, 5.0-8.7%, and 0.8-7.8%, respectively. Accordingly, in some embodiments, the results of the cement-based compositions using the limestone cement as the cement were compared with the results of the cement-based compositions using Portland cement as the cement and without the addition of the additive. From the comparison, even though the limestone cement was used as the cement, since the cement-based compositions contain, for example, 1 wt% of the additive, the 3-day, 7-day, and 28-day compressive strengths (i.e., the early and late compressive strengths) of the cement-based compositions could also be effectively increased.

Moreover, further taking Recipe 20 as another control group, compared with those of Recipe 20 as the control group (where the limestone cement was used as the cement and without the addition of the additive, representing the

"green cement"), the 3-day compressive strengths of the cement-based compositions containing, for example, 1 wt% of the additive could be increased by approximately 0.3-2.3% (e.g., Recipe 26 and Recipe 27), while the 28-day compressive strengths thereof could be increased by approximately 0.8-7.8% (e.g., Recipe 26 and Recipe 27). Accordingly, in some embodiments, the results of the cement-based compositions using the limestone cement as the cement were compared with the results of the cement-based compositions using limestone cement as the cement and without the addition of the additive (i.e., the "green cement"). From the comparison, even though a reduced amount of limestone cement (i.e., 95 wt% and 92 wt%) was used as the cement, since the cement-based compositions contain, for example, 1 wt% of the additive so that the total sum of the cement-based compositions were respectively 96 wt%, and 93 wt% (i.e., a reduced amount of the cement-based cementitious material), at least the 3-day and 28-day compressive strength (i.e., the early and late compressive strengths) of the cement-based compositions could still be effectively increased.

**Example 3L: Compressive Strength of Cement-Based Composition-Cement-Based Cementitious Material Having Slag**

Please refer to TABLE 19 and FIG. 12. FIG. 12 shows the test results of the early and late compressive strengths of the cement-based compositions of Recipe 1, Recipe 23, Recipe 29, and Recipe 30 shown in TABLE 19, and the corresponding data thereof can be referred to the following TABLE 29.

TABLE 29: Test results of the early (the 3-day and 7-day) and late (the 28-day) compressive strengths of the cement-based compositions of Recipe 1, Recipe 23, Recipe 29, and Recipe 30 (design compressive strength: 280 kgf/cm$^2$)

| Components | No. of Recipe | 1 (Control group) | 23 | 29 | 30 |
|---|---|---|---|---|---|
| Cement-based cementitious material | Portland cement | 100.0 | 50.0 | 50.0 | 50.0 |
| | Slag | 0.0 | 50.0 | 49.5 | 48.5 |
| | Additive | 0.0 | 0.0 | 0.5 | 1.5 |
| Compressive strength | 3 days (kgf/cm$^2$) | 267 | 166 | 206 | 216 |
| | 7 days (kgf/cm$^2$) | 422 | 306 | 374 | 358 |
| | 28 days (kgf/cm$^2$) | 571 | 520 | 585 | 587 |
| Compressive strength **increase or decrease percentage** | **3 days (%)** | **-** | **-37.8** | **-22.8** | **-19.1** |
| | **7 days (%)** | **-** | **-27.5** | **-11.4** | **-15.2** |
| | **28 days (%)** | **-** | **-8.9** | **2.5** | **2.8** |

It can be seen from TABLE 29 and FIG. 12 that in the early (the 3-day and 7-day) and late (the 28-day) compressive strength tests, compared with the design compressive strength (i.e., 280 kgf/cm$^2$) and Recipe 1 as a control group (without the addition of either the slag or the additive), when the cement-based compositions contains the slag, in the case of the cement-based composition without the addition of the additive (corresponding to Recipe 23), the 3-day compressive strength was only approximately 166 kgf/cm$^2$, which was apparently less than the design compressive strength. Accordingly, if the cement-based composition contains slag, it would lead to an apparent reduction of the early compressive strength (e.g., the 3-day compressive strength) of the cement-based composition; for example, a reduction of 37.8% as shown in TABLE 29.

Furthermore, compared with those of Recipe 1 as the control group (without the addition of either the slag or the additive), when the cement-based compositions contains the slag, in the case of the cement-based composition without the addition of the additive (corresponding to Recipe 23), the 7-day and 28-day compressive strengths were only

approximately 306 kgf/cm$^2$ and 520 kgf/cm$^2$, which were apparently less than the corresponding compressive strengths of Recipe 1 (i.e., approximately 422 kgf/cm$^2$ and 571 kgf/cm$^2$). Accordingly, if the cement-based composition contains slag, it would lead to an apparent reduction of the late compressive strength (e.g., the 7-day and 28-day compressive strength) of the cement-based composition; for example, a reduction of 27.5% and 8.9% as shown in TABLE 29.

However, with the addition of the additives (corresponding to Recipe 29 and Recipe 30), compared with those of Recipe 23 as the control group (without the addition of the additive), the 3-day, 7-day, and 28-day compressive strengths of the cement-based compositions containing the additives were respectively approximately 206-216 kgf/cm$^2$, 358-374 kgf/cm$^2$, and 585-587 kgf/cm$^2$ with each increased by 24.1-30.1%, 17.0-22.2%, and 12.5-12.9%. Accordingly, in some embodiments, the results of the cement-based compositions with the addition of the additives were compared with the results of the cement-based compositions without the addition of the additives. From the comparison, even though the compressive strengths of the cement-based compositions were reduced due to the addition of slag and without the addition of the additive, once the cement-based compositions contain the additives with the overall weight of slag and the additive being 0.5 times the weight of the cement-based cementitious material, the 3-day, 7-day, and 28-day compressive strengths (i.e., the early and late compressive strengths) of the cement-based compositions could be effectively increased, regardless of whether the slag was added or not.

To sum up, according to some embodiments, a cement-based composition with a work performance superior to the existing cements and/or concretes is provided. With the contents of kaolinite, the carbonyl compounds, and the pH buffer, the cement-based composition can be used for carbon sequestration, and/or carbon fixation as well as maintaining or enhancing the early (e.g., the 3-day and 7-day) compressive strengths and/or maintaining or enhancing the late (e.g., the 28-day) compressive strengths, etc. According to some embodiments, compared with those of the cement-based composition containing the existing green cement (e.g., the limestone cement), a cement-based composition with increased early and late compressive strengths can also be provided. Furthermore, according to some embodiments, even compared with those of the cement-based composition containing a reduced amount of the existing green cement (e.g., the limestone cement), a cement-based composition with increased early and late compressive strengths can also be provided, which can thus avoid sacrificing the compressive strengths of the cement-based composition to comply with environmental protection policies (e.g., energy conservation and carbon reduction). Accordingly, according to some embodiments, solutions that are more environmentally friendly, more conducive to sustainable development, and able to simultaneously enhance the work performance of the cement-based composition can be provided.

## Claims

**1.** An additive comprising:

kaolinite;
a first carbonyl compound comprising ethylene carbonate; and
a pH buffer comprising ethylene carbonate and ethanolamine;
wherein the kaolinite is 0.06-4.995 parts by weight, the first carbonyl compound is 0.0001-2 parts by weight, and the pH buffer is $2\times10^{-9}$-$4\times10^{-2}$ parts by weight.

**2.** The additive according to claim 1, wherein the kaolinite is 0.35-1.99 parts by weight, the first carbonyl compound is 0.0025-0.6 parts by weight, and the pH buffer is $2.5\times10^{-7}$-$12\times10^{-2}$ parts by weight.

**3.** The additive according to claim 1 or 2, wherein a weight ratio of the kaolinite over the first carbonyl compound is 6:4-99.9:0.1, and/or
wherein a weight ratio of the pH buffer over the first carbonyl compound is 20-20,000 ppm.

**4.** The additive according to any one of claims 1 to 3, wherein the weight ratio of the pH buffer over the first carbonyl compound is 100-20,000 ppm.

**5.** A cement-based composition comprising:

a cement-based cementitious material comprising:

cement, 95-99.9 parts by weight; and
the additive according to any of claims 1-5, 0.1-5 parts by weight;

aggregates, 80-330 parts by weight; and

water, 25-63 parts by weight.

6. The cement-based composition according to claim 5, wherein a weight of the water is 0.27-0.48 times a weight of the cement-based cementitious material, and/or
wherein a weight of the aggregates is 1-2.75 times a weight of the cement-based cementitious material.

7. The cement-based composition according to claim 5 or 6, wherein the cement-based cementitious material further comprises slag, and an overall weight of the slag and the additive is 0.4-0.6 times a weight of the cement-based cementitious material.

8. The cement-based composition according to claim 7, wherein a weight of the slag is 0.45-0.499 times the weight of the cement-based cementitious material, and a weight of the additive is 0.001-0.05 times the weight of the cement-based cementitious material,
wherein exemplarily the weight of the slag is 0.485-0.495 times the weight of the cement-based cementitious material, and the weight of the additive is 0.005-0.015 times the weight of the cement-based cementitious material.

9. The cement-based composition according to any of claims 5-8, further comprising a water reducing agent, 64-96 parts by weight.

10. The cement-based composition according to claim 9, wherein the water reducing agent comprises polycarboxylate ether.

11. The cement-based composition according to any of claims 5-10, wherein the cement is Type I Portland cement, limestone ($CaCO_3$) cement, or a combination thereof, or

wherein the cement comprises Type I Portland cement, or
wherein the cement comprises limestone ($CaCO_3$) cement.

12. A method of carbon reduction, carbon sequestration, and/or carbon fixation, comprising adding the additive according to any of claims 1-4 to a cement-based composition.

13. A method of reducing a cement content in a cement-based composition, comprising adding the additive according to any of claims 1-4 to the cement-based composition, wherein as compared with a cement content of a cement-based composition without adding the additive according to any of claims 1-4, the cement content of the cement-based composition with adding the additive according to any of claims 1-4 is reduced.

14. A method of enhancing an early compressive strength, a late compressive strength, or both of the early compressive strength and the late compressive strength of a cement-based composition, comprising adding the additive according to any of claims 1-4 to the cement-based composition, wherein as compared with an early compressive strength, a late compressive strength, or both of the early compressive strength and the late compressive strength of a cement-based composition without adding the additive according to any of claims 1-4, the early compressive strength, the late compressive strength, or both of the early compressive strength and the late compressive strength of the cement-based composition of the cement-based composition with adding the additive according to any of claims 1-4 is enhanced.

15. A method of solidifying a cement-based composition rapidly with an early compressive strength, a late compressive strength, or both of the early compressive strength and the late compressive strength of the cement-based composition maintained or enhanced, comprising adding the additive according to any of claims 1-4 to the cement-based composition, wherein as compared with an early compressive strength, a late compressive strength, or both of the early compressive strength and the late compressive strength of a cement-based composition without adding the additive according to any of claims 1-4, the early compressive strength, the late compressive strength, or both of the early compressive strength, the late compressive strength of the cement-based composition with adding the additive according to any of claims 1-4 is maintained or enhanced.

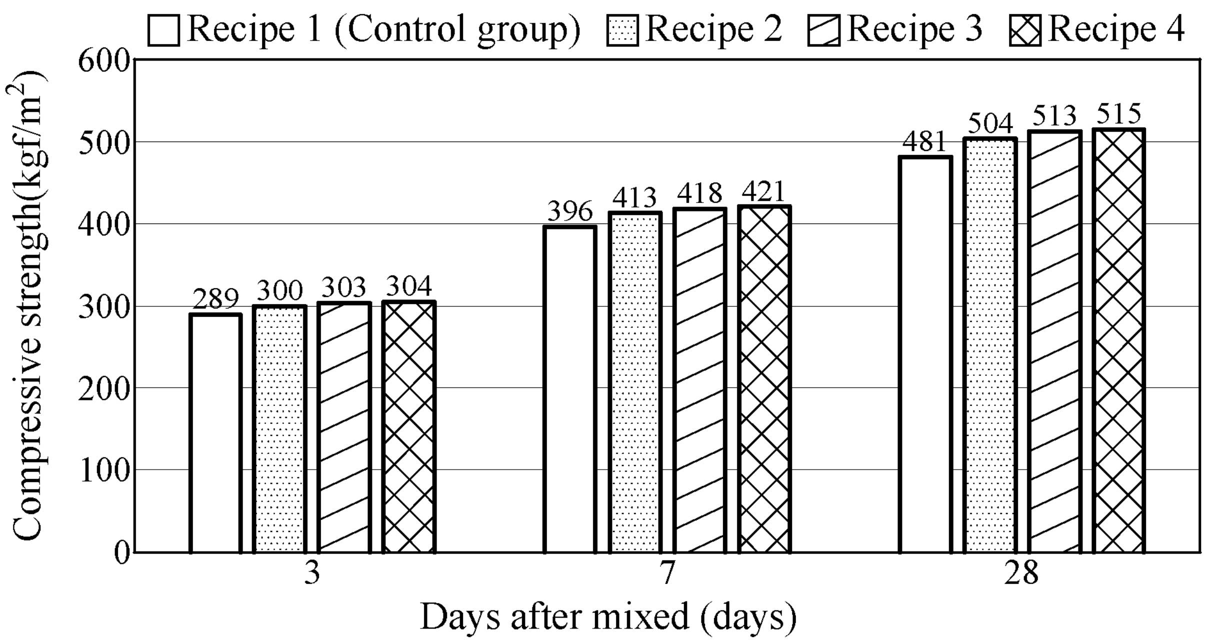
Recipe 1 (Control group)
Recipe 2
Recipe 3
Recipe 4
Compressive strength(kgf/m2)
600
500
400
300
200
100
0
289 300 303 304
396 413 418 421
481 504 513 515
3
7
28
Days after mixed (days)

FIG. 1

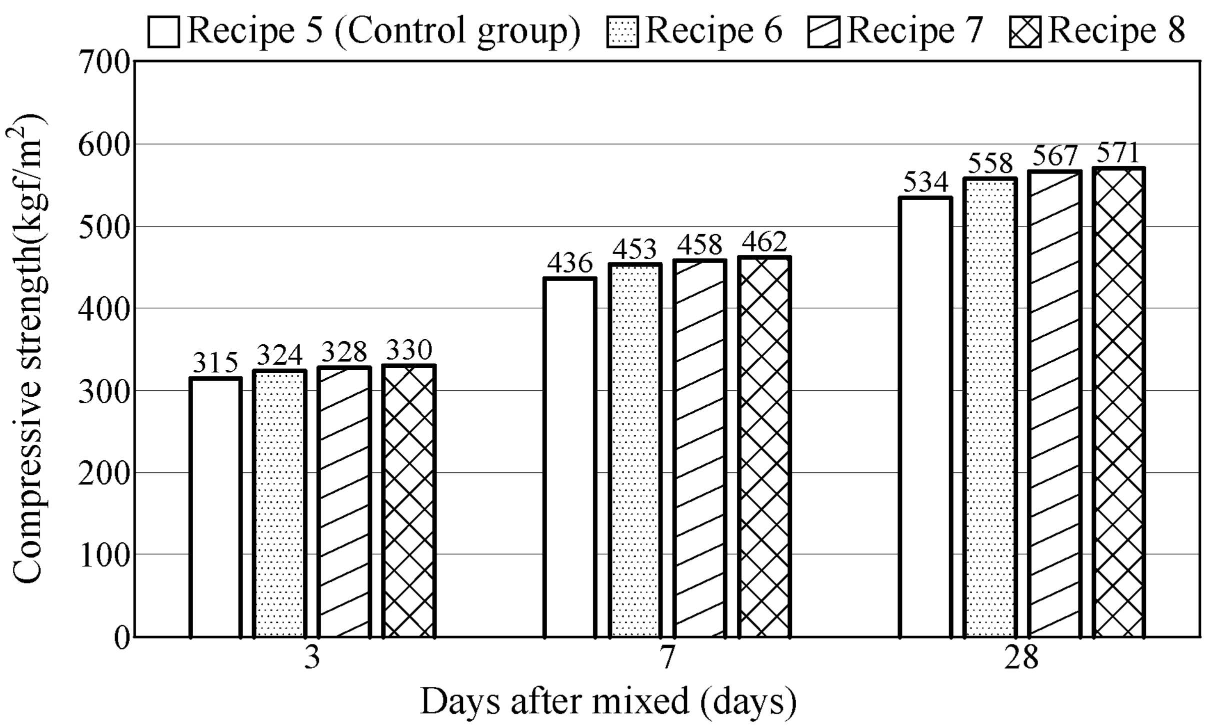
Recipe 5 (Control group)
Recipe 6
Recipe 7
Recipe 8
Compressive strength(kgf/m2)
700
600
500
400
300
200
100
0
315 324 328 330
436 453 458 462
534 558 567 571
3
7
28
Days after mixed (days)

FIG. 2

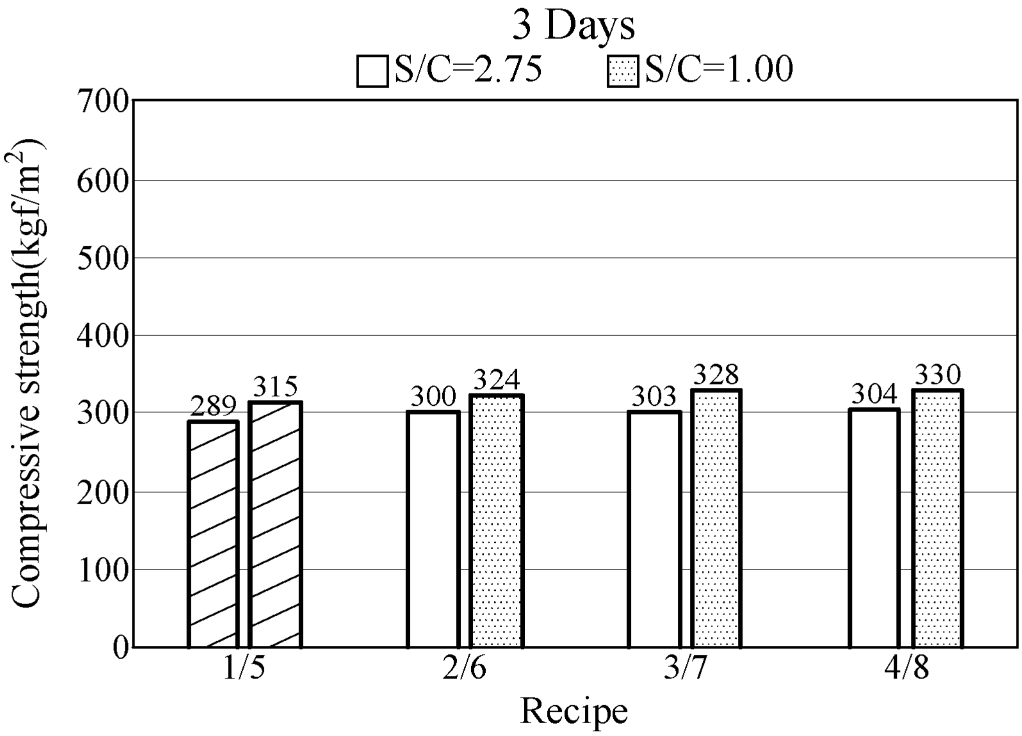
3 Days
S/C=2.75
S/C=1.00
Compressive strength(kgf/m2)
700
600
500
400
300
200
100
0
289
315
300
324
303
328
304
330
1/5
2/6
3/7
4/8
Recipe

FIG. 3A

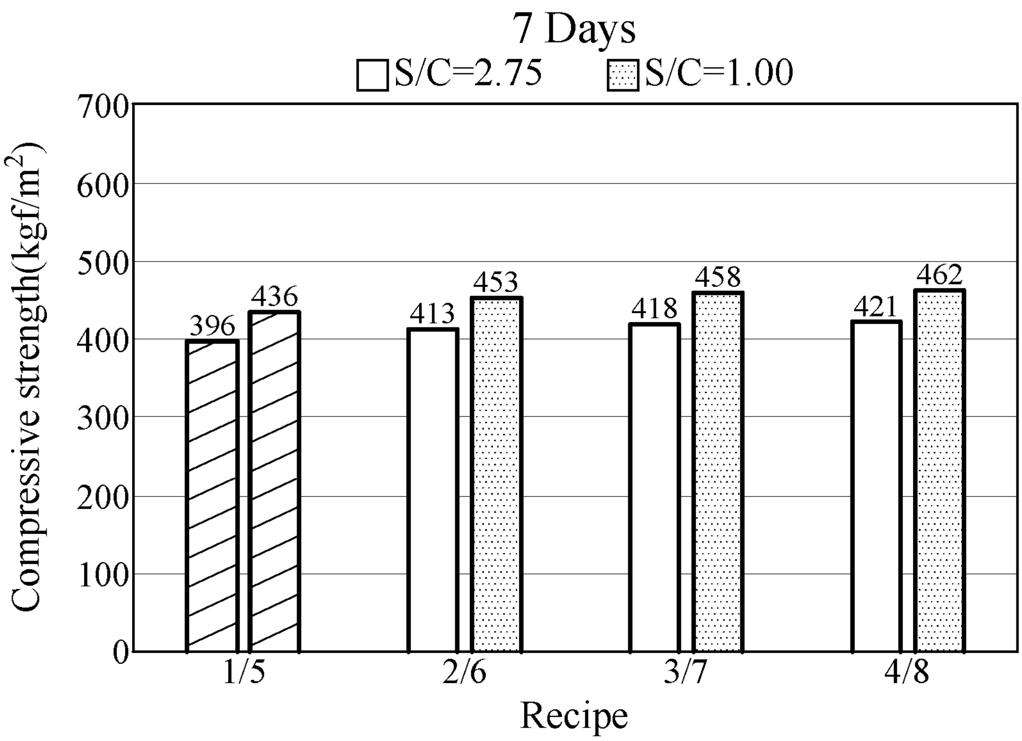
7 Days
S/C=2.75
S/C=1.00
Compressive strength(kgf/m2)
700
600
500
400
300
200
100
0
396
436
413
453
418
458
421
462
1/5
2/6
3/7
4/8
Recipe

FIG. 3B

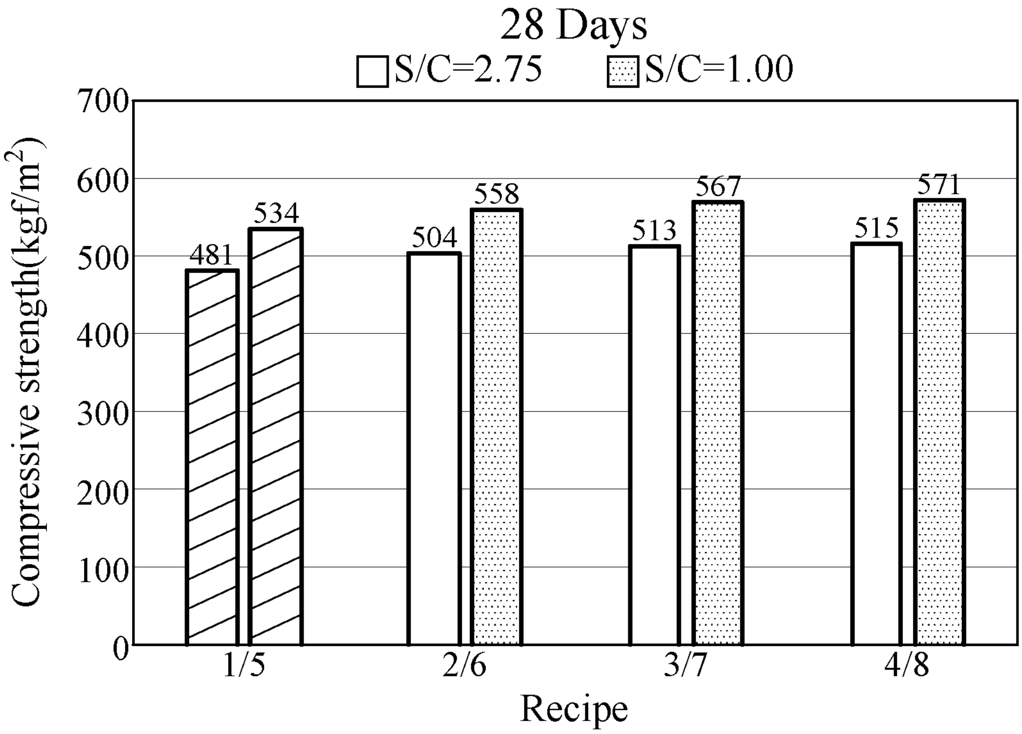
28 Days
S/C=2.75
S/C=1.00
Compressive strength(kgf/m2)
700
600
500
400
300
200
100
0
481
534
504
558
513
567
515
571
1/5
2/6
3/7
4/8
Recipe

FIG. 3C

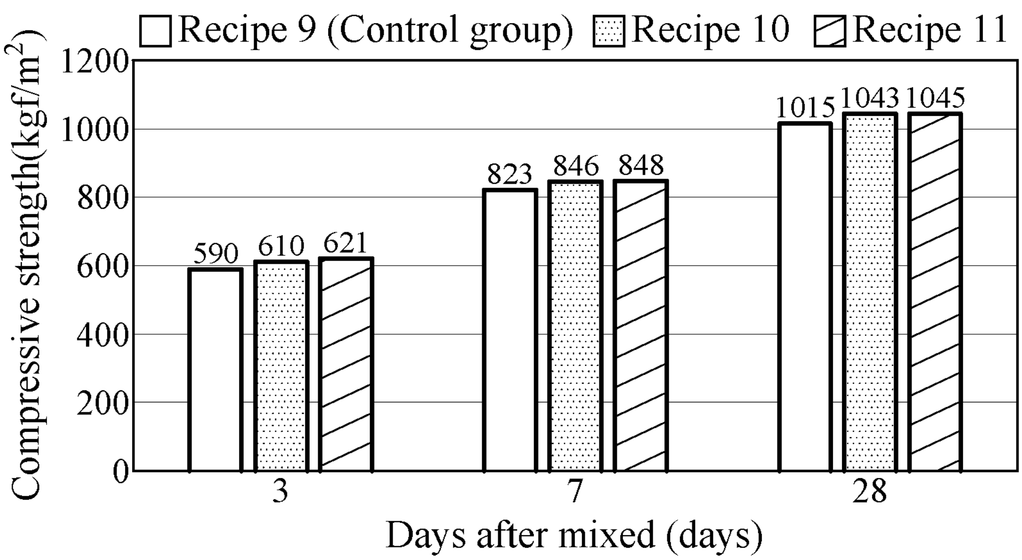
Recipe 9 (Control group)
Recipe 10
Recipe 11
Compressive strength(kgf/m2)
1200
1000
800
600
400
200
0
590
610
621
823
846
848
1015
1043
1045
3
7
28
Days after mixed (days)

FIG. 4

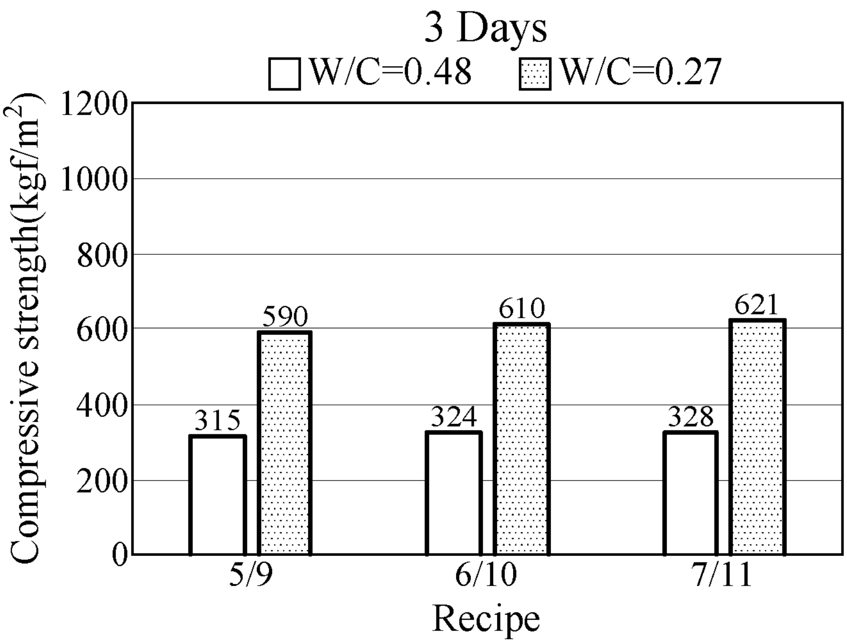
3 Days
W/C=0.48
W/C=0.27
Compressive strength(kgf/m²)
1200
1000
800
600
400
200
0
590
610
621
315
324
328
5/9
6/10
7/11
Recipe

FIG. 5A

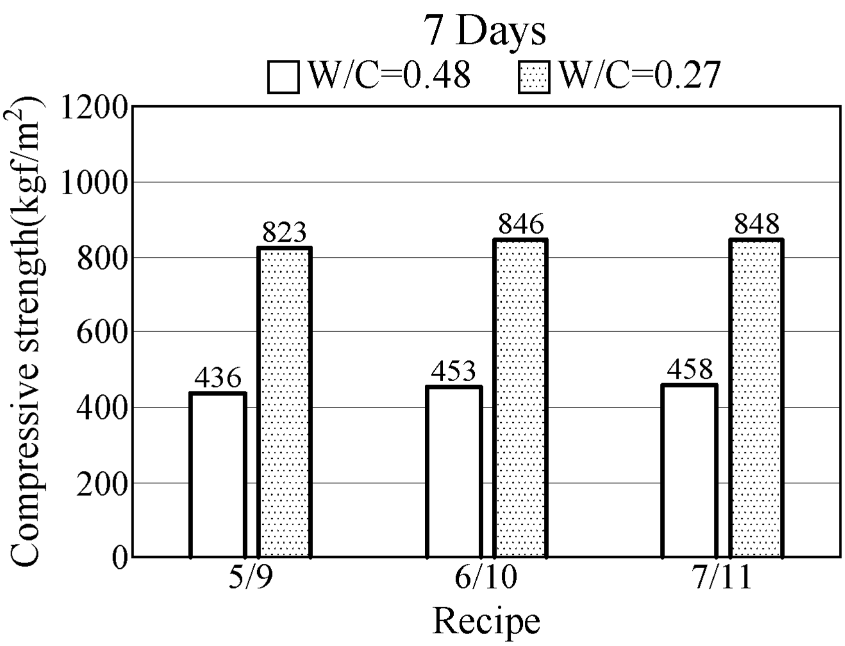
7 Days
W/C=0.48
W/C=0.27
Compressive strength(kgf/m²)
1200
1000
800
600
400
200
0
823
846
848
436
453
458
5/9
6/10
7/11
Recipe

FIG. 5B

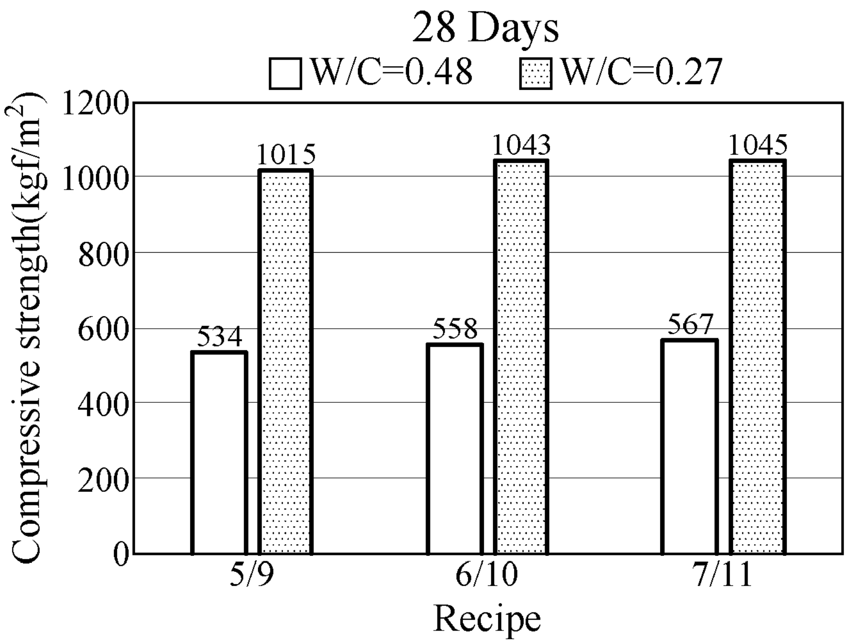

28 Days
W/C=0.48
W/C=0.27
Compressive strength(kgf/m2)
1200
1000
800
600
400
200
0
1015
1043
1045
534
558
567
5/9
6/10
7/11
Recipe


FIG. 5C

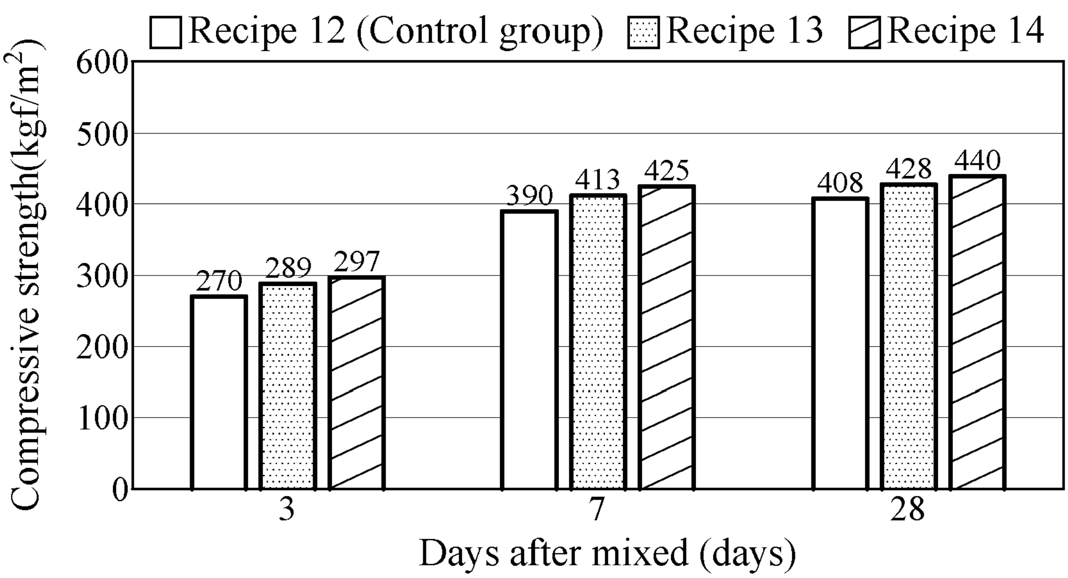

Recipe 12 (Control group)
Recipe 13
Recipe 14
Compressive strength(kgf/m2)
600
500
400
300
200
100
0
270
289
297
390
413
425
408
428
440
3
7
28
Days after mixed (days)


FIG. 6

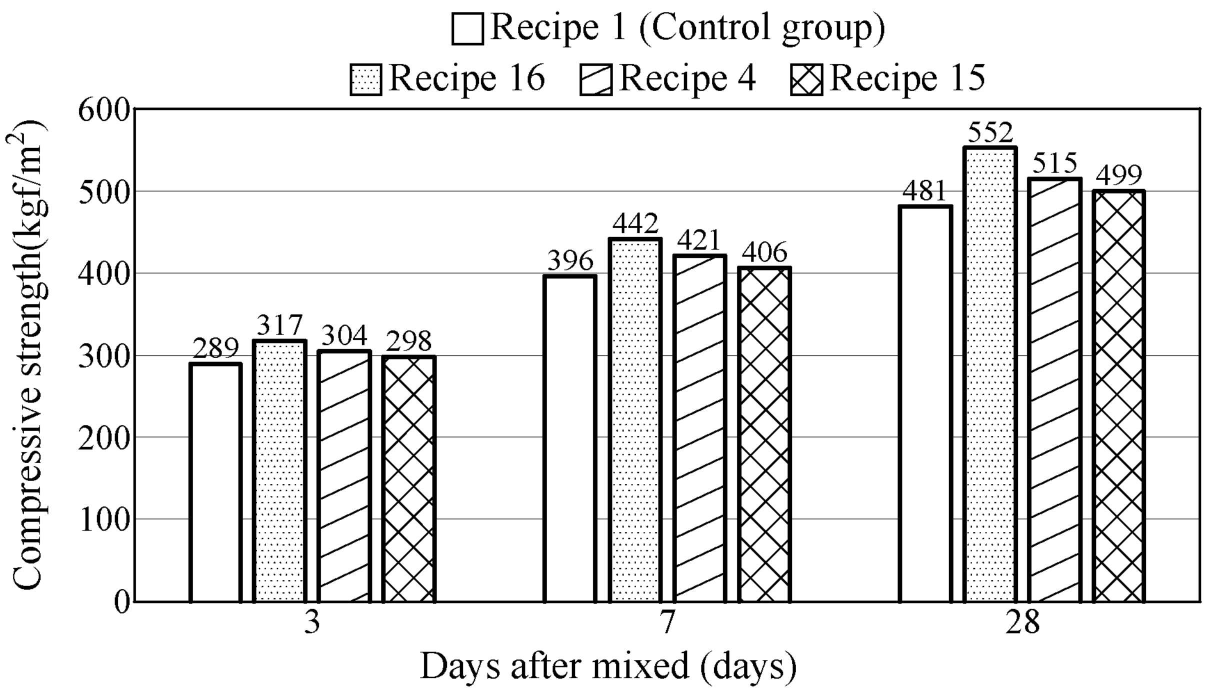
Recipe 1 (Control group)
Recipe 16
Recipe 4
Recipe 15
Compressive strength(kgf/m2)
600
500
400
300
200
100
0
289
317
304
298
396
442
421
406
481
552
515
499
3
7
28
Days after mixed (days)

FIG. 7

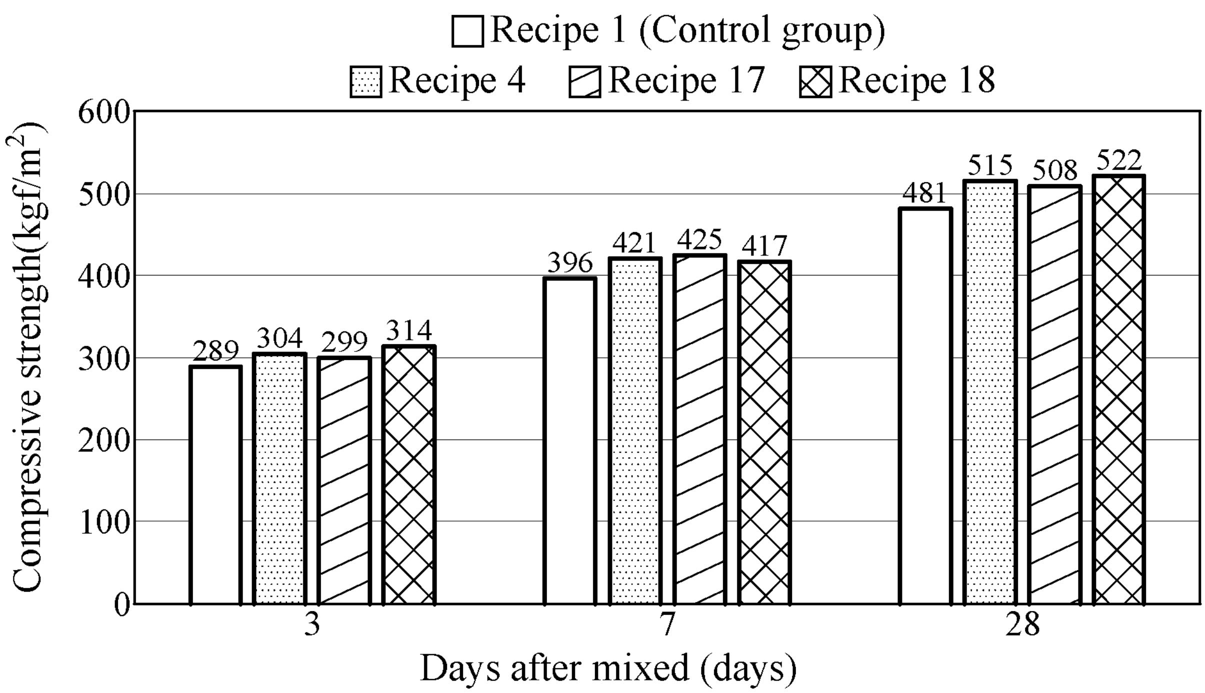
Recipe 1 (Control group)
Recipe 4
Recipe 17
Recipe 18
Compressive strength(kgf/m2)
600
500
400
300
200
100
0
289
304
299
314
396
421
425
417
481
515
508
522
3
7
28
Days after mixed (days)

FIG. 8

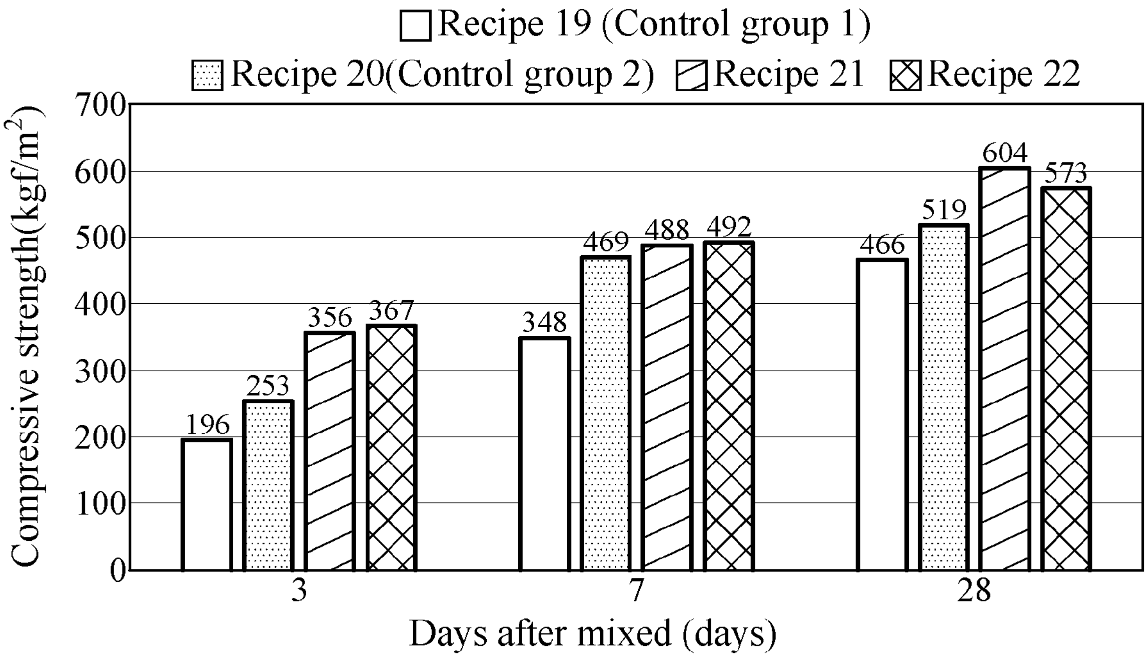
Recipe 19 (Control group 1)
Recipe 20(Control group 2)
Recipe 21
Recipe 22
Compressive strength(kgf/m2)
700
600
500
400
300
200
100
0
196
253
356
367
348
469
488
492
466
519
604
573
3
7
28
Days after mixed (days)

FIG. 9

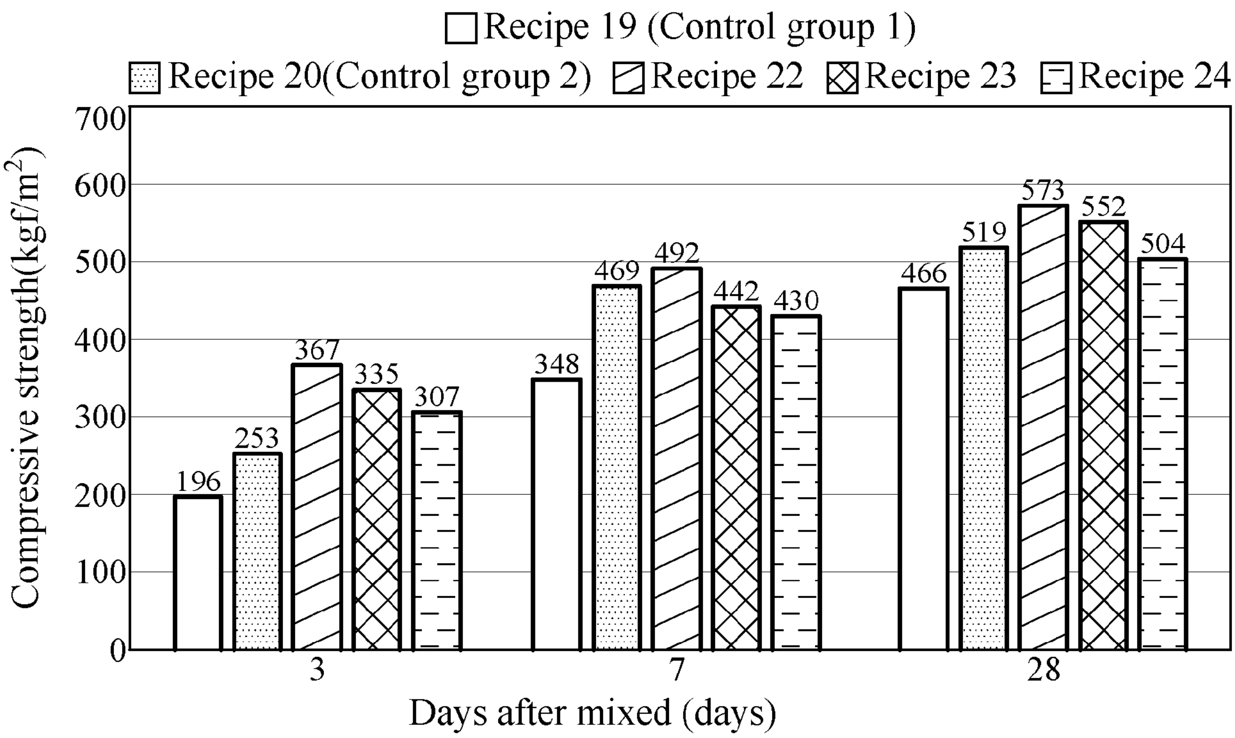
Recipe 19 (Control group 1)
Recipe 20(Control group 2)
Recipe 22
Recipe 23
Recipe 24
Compressive strength(kgf/m2)
700
600
500
400
300
200
100
0
196
253
367
335
307
348
469
492
442
430
466
519
573
552
504
3
7
28
Days after mixed (days)

FIG. 10

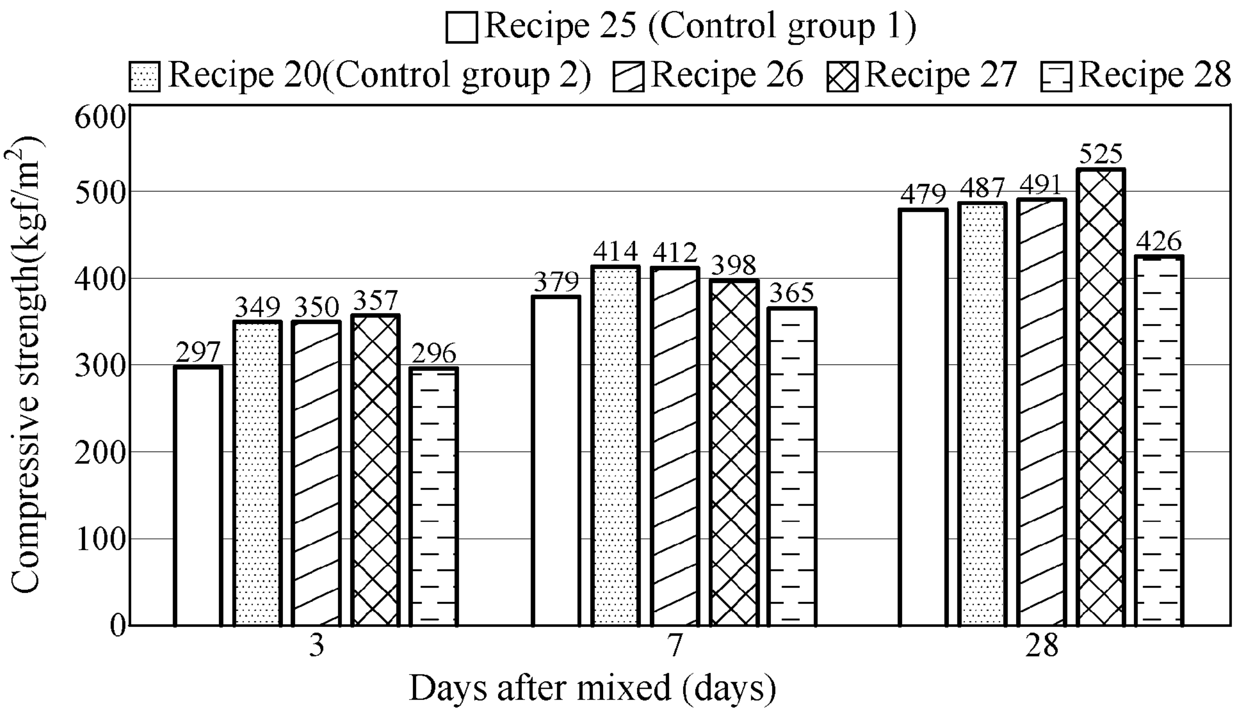
Recipe 25 (Control group 1)
Recipe 20(Control group 2)
Recipe 26
Recipe 27
Recipe 28
Compressive strength(kgf/m$^2$)
600
500
400
300
200
100
0
297
349
350
357
296
379
414
412
398
365
479
487
491
525
426
3
7
28
Days after mixed (days)

FIG. 11

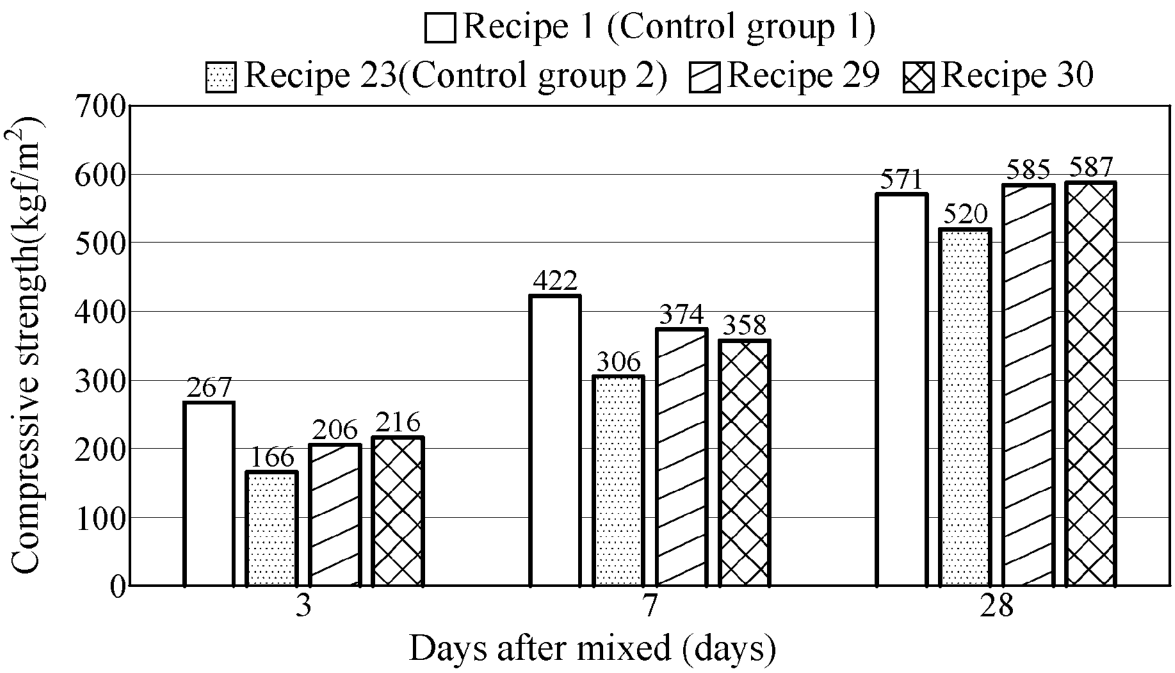
Recipe 1 (Control group 1)
Recipe 23(Control group 2)
Recipe 29
Recipe 30
Compressive strength(kgf/m$^2$)
700
600
500
400
300
200
100
0
267
166
206
216
422
306
374
358
571
520
585
587
3
7
28
Days after mixed (days)

FIG. 12

Europäisches Patentamt
European Patent Office
Office européen des brevets

# EUROPEAN SEARCH REPORT

Application Number
EP 25 16 8489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIN PENGHAO ET AL: "Effects of CO2-absorbed triethanolamine solutions on strength development of cement mortars and the mechanism: Synergism of cement hydration and carbonation", CONSTRUCTION & BUILDING MATERIALS, vol. 413, 1 January 2024 (2024-01-01), page 134708, XP093306373, AMSTERDAM, NL ISSN: 0950-0618, DOI: 10.1016/j.conbuildmat.2023.134708 * the whole document * ----- | 1-15 | INV. C04B28/02 C04B40/00 |
| A | US 5 669 968 A (KOBORI SHIGEJI [JP] ET AL) 23 September 1997 (1997-09-23) * the whole document * ----- | 1-15 | |
| A | US 6 506 246 B1 (CHERITON LESLIE W [GB] ET AL) 14 January 2003 (2003-01-14) * the whole document * ----- | 1-15 | TECHNICAL FIELDS SEARCHED (IPC) |
| A | JP 2 984876 B2 (TOKYO ELECTRIC POWER CO; HAZAMA GUMI ET AL.) 29 November 1999 (1999-11-29) * the whole document * ----- | 1-15 | C04B |

The present search report has been drawn up for all claims

1

| Place of search | Date of completion of the search | Examiner |
|---|---|---|
| Munich | 1 September 2025 | Roesky, Rainer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 16 8489

This annex lists the patent family members relating to the patent documents cited in the above-mentioned European search report. The members are as contained in the European Patent Office EDP file on
The European Patent Office is in no way liable for these particulars which are merely given for the purpose of information.

01-09-2025

| Patent document cited in search report | | Publication date | Patent family member(s) | | | Publication date |
|---|---|---|---|---|---|---|
| US 5669968 | A | 23-09-1997 | AU | 664675 | B2 | 23-11-1995 |
| | | | CA | 2118451 | A1 | 30-04-1995 |
| | | | DE | 69416634 | T2 | 17-06-1999 |
| | | | EP | 0650940 | A1 | 03-05-1995 |
| | | | JP | H07126048 | A | 16-05-1995 |
| | | | KR | 950011352 | A | 15-05-1995 |
| | | | US | 5669968 | A | 23-09-1997 |
| US 6506246 | B1 | 14-01-2003 | AU | 757943 | B2 | 13-03-2003 |
| | | | CA | 2341717 | A1 | 16-03-2000 |
| | | | PL | 347309 | A1 | 25-03-2002 |
| | | | US | 6506246 | B1 | 14-01-2003 |
| | | | WO | 0014026 | A2 | 16-03-2000 |
| JP 2984876 | B2 | 29-11-1999 | JP | 2984876 | B2 | 29-11-1999 |
| | | | JP | H073264 | A | 06-01-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- Analysis and Design) of Code for Design of Concrete Structures. NLMA, MOI, R.O.C.